# EUROPEAN PATENT APPLICATION

(11) **EP 3 901 770 A1**
(43) Date of publication of application: **27.10.2021**
(21) Application number: 19909756.9
(22) Date of filing: 30.12.2019
(51) Int. Cl.: G06F 9/455

(54) **METHOD AND DEVICE FOR INSTANTIATING VIRTUALIZED NETWORK FUNCTION**

(30) Priority: 17.01.2019 CN 201910047927
(71) Applicant: Huawei Technologies Co., Ltd., Longgang District, Shenzhen, Guangdong 518129, (CN)
(72) Inventor: QIN, Dongrun, Shenzhen, Guangdong 518129 (CN); CAO, Longyu, Shenzhen, Guangdong 518129 (CN); LI, Xianming, Shenzhen, Guangdong 518129 (CN); YU, Yijun, Shenzhen, Guangdong 518129 (CN)
(74) Representative: Pfenning, Meinig & Partner mbB
(86) International application number: PCT/CN2019/130223
(87) International publication number: WO 2020/147573

(57) **Abstract**

A method and a device for instantiating a VNF are provided. The method includes: A first network element receives first information used to indicate to instantiate a VNF. The first network element obtains hardware resource information used to indicate an available resource of a network functions virtualization infrastructure, where the available resource includes a resource of at least one piece of hardware, and the hardware represents a minimum physical resource set used to bear a virtual machine. The first network element determines, based on the first information and the hardware resource information, a one-to-one mapping relationship between at least one virtual machine corresponding to the VNF and at least one piece of hardware corresponding to the VNF. The first network element determines, based on the mapping relationship, to instantiate the at least one virtual machine on the at least one piece of hardware. This method can improve hardware resource utilization and improve VM deployment efficiency.

## Description

This application claims priority to Chinese Patent Application No.201910047927.3, filed with the Chinese Patent Office on January 17, 2019 and entitled "METHOD AND DEVICE FOR INSTANTIATING VIRTUALIZED NETWORK FUNCTION", which is incorporated herein by reference in its entirety.

### TECHNICAL FIELD

The present invention relates to the field of computer technologies, and in particular, to a method and a device for instantiating a virtualized network function.

### BACKGROUND

Network functions virtualization (Network Function Virtualization, NFV) is to integrate different network devices into a standard commercial-off-the-shelf (Commercial-Off-The-Shelf, COTS) server, a switch, a cloud platform (the cloud platform is a virtual machine platform formed by virtualizing physical hardware), and a storage by using a standard IT virtualization technology, so as to implement decoupling between software and hardware. These standard devices may be deployed in a data center, deployed on a network node, or deployed at home of a user.

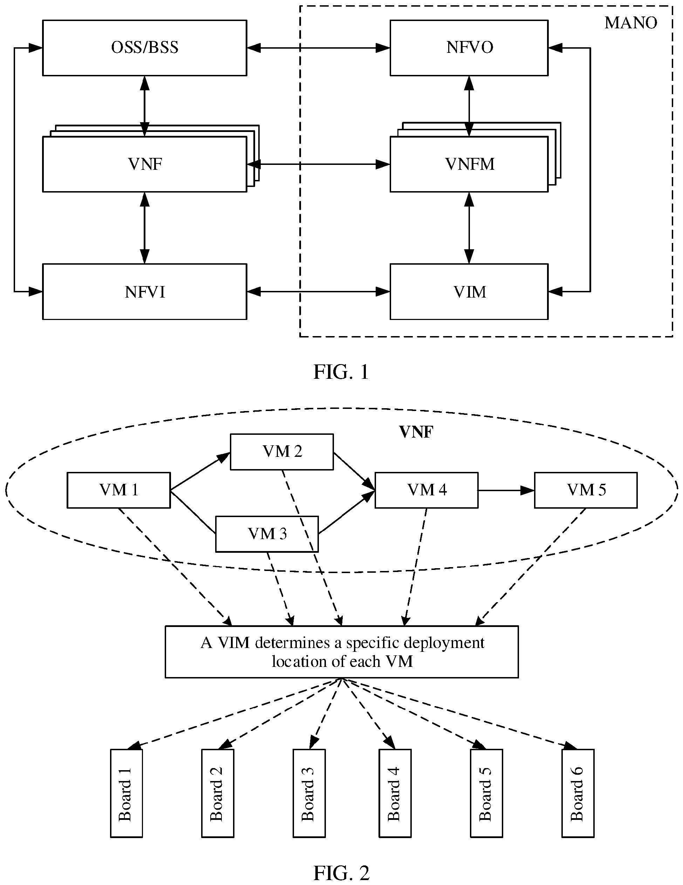

As shown in FIG. 1, an existing common NFV system architecture mainly includes a network functions virtualization infrastructure (Network Function Virtualization Infrastructure, NFVI), a management and orchestration (Management and Orchestration, MANO) system, and a virtualized network function (Virtualized Network Function, VNF). The NFVI is mainly responsible for fully virtualizing computing, storage, and network hardware resources, and mapping these resources to virtual resources. The VNF implements various conventional physical network functions by using software. The VNF runs on the NFVI, and uses the virtual resources obtained through virtualization performed by the NFVI. The MANO is responsible for performing lifecycle management and orchestration of software and hardware resources of the NFVI and lifecycle management and orchestration of the VNF.

Further, the MANO includes a virtualized infrastructure manager (Virtualized Infrastructure Managers, VIM), a virtualized network function manager (Virtualized Network Function Managers, VNFM), and a network functions virtualization orchestrator (Network Function Virtualization Orchestrator, NFVO). The VIM is responsible for performing management, monitoring, and optimization on all physical hardware virtual resources. The VNFM is responsible for performing lifecycle management of the VNF. The NFVO is responsible for performing orchestration and management of basic resources and upper-layer software resources, to implement a network service (network service, NS). The NFVO can provide an interface for management functions of a network service provider. The management functions are, for example, an operations support system (Operations Support Systems, OSS) and a business support system (Business Support System, BSS).

VNFs can be understood as virtualized network elements. For example, for network elements in a communications network, that is, an MME, an SGW, and a PGW, each network element performs a network function (Network Function) in the communications network, and after these network elements are virtualized by using the virtualization technology, virtualized network elements become the VNFs. The VNF is implemented in a software manner, can run on hardware of a series of industry standard servers, and can be migrated, instantiated, and deployed at different locations in the network depending on a requirement, without a need to install a new device. Therefore, compared with specialized network devices, COTS hardware devices provided by different vendors are integrated more easily. This can significantly reduce integration costs of the devices of the different vendors, and can effectively avoid vendor lock-in.

The VNF usually includes a plurality of VNFCs (VNF Component), and different VNFCs are borne on different types of virtual machines (Virtual Machine, VM) in the NFVI, as shown in FIG. 2. Due to mutual dependence between VNFCs, priorities of VMs on which the VNFCs are located are usually defined in a VNF instantiation process, so that the VMs are instantiated (deployed), based on a priority sequence, on boards determined by the VIM, thereby ensuring smooth rollout of network function services.

In the current technology, the NFVO and the VIM interact with each other to deploy all VMs required by the VNF. In the existing architecture, the NFVO is responsible for determining a VM instantiation sequence based on the priorities of the VMs in the VNF instantiation process, while the VIM is responsible for completing a real instantiation operation and determining specific deployment locations of the VMs. In this case, the NFVO and the VIM each obtain only partial information in a deployment process. The NFVO delivers only a current-priority VM instantiation request each time, and the VIM cannot learn hardware resources required by a low-priority VM. Consequently, a high-priority VM preempts hardware resources of a low-priority VM, causing a waste of hardware resources and even a failure in VM deployment.

### SUMMARY

Embodiments of the present invention provide a method and a device for instantiating a virtualized network function, to improve hardware resource utilization and improve VM deployment efficiency.

According to a first aspect, an embodiment of the present invention provides a method for instantiating a VNF. The method includes: A first network element receives first information used to indicate to instantiate a VNF. The first network element obtains hardware resource information used to indicate an available resource of a network functions virtualization infrastructure, where the available resource includes a resource of at least one piece of hardware, and the hardware represents a minimum physical resource set used to bear a virtual machine. The first network element determines, based on the first information and the hardware resource information, a one-to-one mapping relationship between at least one virtual machine corresponding to the VNF and at least one piece of hardware corresponding to the VNF. The first network element determines, based on the mapping relationship, to instantiate the at least one virtual machine on the at least one piece of hardware. The first network element may be a network element in a MANO system.

It can be learnt that, based on the first information, the hardware resource information, and the like, the first network element that is in the MANO system and that is provided in this embodiment of the present invention can orchestrate in advance resources of the plurality of VMs corresponding to the VNF, and determine the mapping relationship between the VMs and hardware resources. Then, based on the mapping relationship, the first network element determines to instantiate, on each piece of specified hardware, a VM mapped to the hardware. Therefore, implementing this embodiment of the present invention can implement accurate deployment of the VMs, improve hardware resource utilization, and improve VM deployment efficiency.

With reference to the first aspect, in a possible implementation, there are a plurality of virtual machines corresponding to the VNF. The method further includes: The first network element determines an instantiation sequence of the plurality of virtual machines based on the first information and the hardware resource information. Correspondingly, the first network element may determine, based on the instantiation sequence of the plurality of virtual machines and the mapping relationship between the plurality of virtual machines corresponding to the VNF and the plurality of pieces of hardware corresponding to the VNF, to instantiate the plurality of virtual machines on the plurality of pieces of hardware.

It can be learnt that, based on the first information, the hardware resource information, and the like, the first network element provided in this embodiment of the present invention can orchestrate in advance resources of the plurality of VMs corresponding to the VNF, and determinethe instantiation sequence of all the VMs and the one-to-one mapping relationship between the VMs and hardware resources. Then, based on the mapping relationship and the instantiation sequence, the first network element determines to instantiate, on each piece of specified hardware, a VM mapped to the hardware. Therefore, implementing this embodiment of the present invention can avoid a prior-art problem that a high-priority VM preempts hardware resources of a low-priority VM because of VM deployment performed based on priorities of the VMs, implement accurate deployment of the VMs, improve hardware resource utilization, and improve VM deployment efficiency.

In some embodiments, the first network element is a virtual resource orchestrator and allocator (Virtualized Resource Orchestrator & Allocator, VROA) that is newly added based on an existing NFV architecture and that is provided in this embodiment of the present invention. In this case, the first network element receives the first information sent by an NFVO. The first information includes at least one of: at least one virtual machine type, an indication signal of a required resource corresponding to the at least one virtual machine type, instantiation priorities corresponding to the virtual machine types, virtual machine quantities corresponding to the virtual machine types required for instantiating the VNF, or constraint information corresponding to the at least one virtual machine type. In some specific application scenarios, the first information is specifically a first request used for requesting to instantiate the VNF.

In some embodiments, the first network element is a network element formed by integrating a function of an NFVO and a function of a VROA provided in the present invention. For example, the VROA may be used as a function submodule of the NFVO, and therefore such an NFVO is the first network element. In this case, in some embodiments, the first information may be specifically a VNF descriptor (VNFD).

In some embodiments, the first network element is a network element formed by integrating a function of a VIM and a function of a VROA provided in the present invention. For example, the VROA may be used as a function submodule of the VIM, and therefore such a VIM is the first network element. In some specific application scenarios, the first information is specifically a first request used for requesting to instantiate the VNF.

With reference to the first aspect, in a possible implementation, when the first network element is the VROA provided in this embodiment of the present invention or the first network element is the network element formed by integrating the function of the NFVO and the function of the VROA provided in the present invention, that the first network element determines, based on the mapping relationship, to instantiate the at least one virtual machine on the at least one piece of hardware specifically includes: The first network element indicates, based on the mapping relationship, the VIM to instantiate the at least one virtual machine on the at least one piece of hardware.

Further, the first network element may indicate, based on the mapping relationship and the instantiation sequence, the virtualized infrastructure manager to instantiate the at least one virtual machine on the at least one piece of hardware.

For example, in some application scenarios, the first network element may sequentially indicate, based on the instantiation sequence of the at least one virtual machine, the virtualized infrastructure manager to instantiate, on current corresponding hardware, a virtual machine mapped to the current corresponding hardware. Specifically, the VROA may sequentially send second requests to the VIM based on the instantiation sequence of the plurality of VMs. A second request sent each time includes an identifier (ID) of a VM that needs to be instantiated currently, a hardware ID mapped to the ID of the VM that needs to be instantiated currently, and an indication signal of a resource required by the VM that needs to be instantiated currently. The indication signal does not include VM instantiation priorities and VM quantity information. Then, the VIM may instantiate, on current specified hardware of the NFVI, a VM mapped to the hardware. After deployment of the current VM is completed, the VROA continues to perform a process similar to that in the foregoing description on a next VM based on the instantiation sequence, until all the VMs are successfully instantiated. An advantage of this solution is: The VROA needs to send only related information of a current VM to the VIM each time, and therefore a current data sending amount is reduced. The VROA continues to perform next sending only when the VIM feeds back an ACK.

For example, in some other application scenarios, the first network element sends the mapping relationship and the instantiation sequence to the virtualized infrastructure manager, so that the virtualized infrastructure manager instantiates the at least one virtual machine on the at least one piece of hardware based on the mapping relationship and the instantiation sequence. Specifically, the VROA may alternatively deliver related information of all the VMs at a time. In other words, a second request sent by the VROA to the VIM includes: IDs of the plurality of VMs required for instantiating the VNF, a one-to-one mapping relationship between the IDs of the plurality of VMs and IDs of the plurality of pieces of hardware, the instantiation sequence of the plurality of VMs, and indication signals of resources required by the plurality of VMs. The indication signals do not include VM instantiation priorities and VM quantity information. In this way, the VIM can sequentially instantiate the VMs locally based on the VM instantiation sequence, to reduce reciprocating interactions with the VROA, and improve VM deployment efficiency.

With reference to the first aspect, in a possible implementation, the method further includes: The first network element obtains instantiation policy information, where the instantiation policy information indicates a policy used for instantiating the at least one virtual machine. The policy is, for example, a memory-first policy, a resource utilization-first policy, or a host balance degree-first policy. This facilitates dynamic adjustment of the VM instantiation policy based on characteristics of the VNF, thereby better satisfying a user requirement. Correspondingly, the first network element may determine, based on the first information, the hardware resource information, and the instantiation policy information, the VM instantiation sequence and the mapping relationship between the virtual machine corresponding to the VNF and the hardware corresponding to the VNF. Therefore, implementing this embodiment of the present invention facilitates dynamic adjustment of the instantiation policy based on the characteristics of the VNF in a multi-VNF co-deployment scenario.

With reference to the first aspect, in a possible implementation, that the first network element determines, based on the first information and the hardware resource information, solution information corresponding to the VNF (the solution information includes the VM instantiation sequence and the mapping relationship between the virtual machine required by the VNF and the hardware required by the VNF) may specifically include:
The first network element determines the one-to-one mapping relationship between the at least one virtual machine corresponding to the VNF and the at least one piece of hardware corresponding to the VNF, based on the resource of the at least one piece of hardware, the indication signal of the required resource corresponding to the at least one virtual machine type, and the constraint information corresponding to the plurality of virtual machine types; and the first network element determines the instantiation sequence of the at least one virtual machine based on the instantiation priority corresponding to the at least one virtual machine type and the virtual machine quantities corresponding to the virtual machine types required for instantiating the VNF.

The constraint information corresponding to the plurality of virtual machine types specifically includes at least one of: affinity/anti-affinity of a same virtual machine type, affinity/anti-affinity of different virtual machine types, and a physical location constraint on virtual machine instantiation.

With reference to the first aspect, in a possible implementation, that the first network element obtains hardware resource information used to indicate an available resource of a network functions virtualization infrastructure includes the following implementation scenarios.

In some embodiments, when the first network element is the VROA provided in this embodiment of the present invention, the first network element may query for the hardware resource information from the VIM.

In some embodiments, when the first network element is the network element formed by integrating the function of the NFVO and the function of the VROA provided in the present invention, the first network element may query for the hardware resource information from the VIM.

In some embodiments, when the first network element is the network element formed by integrating the function of the VIM and the function of the VROA provided in the present invention, the first network element may directly detect the NFVI to obtain the hardware resource information of the NFVI.

With reference to the first aspect, in a possible implementation, in a scenario in which there are a plurality of VROAs, contention for underlying hardware resources is inevitable in a process of instantiating different VNFs. To avoid a series of problems caused by resource preemption, this embodiment of the present invention further provides some manners for avoiding resource preemption.

In a manner of avoiding resource preemption, in a scenario in which there are a plurality of first network elements (for example, a plurality of VROAs), two working states may be designed for the VIM: a reserve (reserve) state and a free (free) state. The reserve state indicates that a use status of the VIM is an occupied state. In this case, the VIM provides a VM instantiation service only for a current first network element, but does not provide a VM instantiation service for other first network elements. The free state indicates that the VIM is in an idle state. In this case, the VIM can provide a service for any first network element. The VIM may switch between the two states by interacting with the first network element.

In this scenario, in a process in which the current first network element (for example, the VROA, or the network element formed by combining the functions of the VROA and the NFVO) queries for the hardware resource information from the VIM, the first network element sends a request used for querying for the hardware resource information to the VIM. Then, the VIM updates the status of the VIM from the free state to the reserve state, that is, the VIM provides a service only for the current first network element, and generates first use status information of the VIM. The first use status information indicates that the use status of the virtualized infrastructure manager has changed from the idle state to the occupied state. Next, the VIM sends the hardware resource information and the first use status information of the VIM to the first network element.

In the foregoing scenario, after modifying the status of the VIM from the free state to the reserve state, the VIM may alternatively not generate the first use status information. In this case, the VIM needs to feed back only the hardware resource information to the VROA.

In another manner of avoiding resource preemption, the VIM has two working states (a reserve state and a free state), and working states of each piece of hardware (for example, a board/host) managed by the VIM may also be classified into a reserve (reserve) state and a free (free) state. A status change of each piece of hardware may be recorded and stored by the VIM. It can be understood that, if a status of a piece of hardware is a reserve state, it indicates that a use status of the hardware is an occupied state; or if a status of a piece of hardware is a free state, it indicates that the hardware is in an idle state. The VIM may interact with the VROA, to change the status of the VIM and modify hardware-related status information stored in the VIM. In a scenario in which there are a plurality of first network elements (for example, a plurality of VROAs), some pieces of specified hardware provide a deployment service only for a current first network element, but do not provide a deployment service for other VROAs.

In this scenario, in a process in which the current first network element (for example, the VROA, or the network element formed by combining the functions of the VROA and the NFVO) queries for the hardware resource information from the VIM, the first network element indicates the VIM to update the use status of the VIM from the free state to the reserve state. In addition, after determining the one-to-one mapping relationship between the at least one virtual machine corresponding to the VNF and the at least one piece of hardware corresponding to the VNF, the current first network element sends a request used for requesting to occupy hardware resources to the VIM. The request used for requesting to occupy the hardware resources includes an identifier of the at least one piece of hardware mapped to the at least one virtual machine. The VIM updates a status of each piece of corresponding hardware from the free state to the reserve state based on hardware IDs, and in this case, the hardware corresponding to these hardware IDs does not respond to a VM deployment requirement of other VROAs. The VIM updates the status of the VIM from the reserve state to the free state, and in this case, the VIM can respond to a resource query request or a resource occupation request of the other VROAs. Moreover, the VIM may further locally store information about all hardware IDs corresponding to the reservation ID.

Furthermore, in a possible embodiment, the VIM may further generate second use status information. The second use status information indicates that the use status of the VIM has changed from the reserve state to the free state and that the use status of each piece of hardware on which the VNF needs to be deployed has changed from the free state to the reserve state. In a specific implementation, the second use status information may be a group of randomly generated numerals. In another specific implementation, the second use status information may alternatively be ACK information.

It can be learnt that in this embodiment of the present invention, in the process in which the VIM instantiates the VNF, the VIM locks in only the hardware resources that need to be used by the VNF, and other hardware resources can still be requested by other VROAs. This greatly improves resource utilization efficiency and avoids a waste of hardware resources.

With reference to the first aspect, in a possible implementation, the method further includes: The first network element obtains capability information of the VIM (referred to as VIM capability information for short), and verifies, by using the VIM capability information, whether the VIM is suitable for performing a related solution of this embodiment of the present invention. The VIM capability information is used to indicate whether the VIM is capable of instantiating a virtual machine on hardware specified by the first network element. Correspondingly, the first network element obtains the hardware resource information used to indicate the available resource of the NFVI, only when the VIM capability information indicates that the virtualized infrastructure manager is capable of instantiating a virtual machine on hardware specified by the first network element.

In a possible implementation, the VIM capability information may carry a flag field "0" or "1" for indication. "0" may indicate that the VIM does not support VM instantiation performed based on a hardware ID indicated by the VROA, and "1" may indicate that the VIM supports VM instantiation performed based on the hardware ID indicated by the VROA.

In another possible implementation, the VIM capability information may carry a specified indication message (for example, "support/non-support") to indicate whether the VIM is capable of performing VM instantiation based on a hardware ID indicated by the VROA.

According to a second aspect, an embodiment of the present invention provides a network element device for instantiating a VNF. The device includes a communications unit, a resource orchestration unit, and a deployment unit, where
the communications unit is configured to receive first information used to indicate to instantiate a VNF, where
the communications unit is further configured to obtain hardware resource information used to indicate an available resource of a network functions virtualization infrastructure, where the available resource includes a resource of at least one piece of hardware, and the hardware represents a minimum physical resource set used to bear a virtual machine;
the resource orchestration unit is configured to determine, based on the first information and the hardware resource information, a one-to-one mapping relationship between at least one virtual machine corresponding to the VNF and at least one piece of hardware corresponding to the VNF; and
the deployment unit is configured to determine, based on the mapping relationship, to instantiate the at least one virtual machine on the at least one piece of hardware.

The function units of the network element device are specifically configured to implement the method according to the first aspect.

According to a third aspect, an embodiment of the present invention provides another network element device for instantiating a VNF. The device includes a memory and one or more processors coupled to the memory, the memory is configured to store program instructions, and the one or more processors are configured to invoke the program instructions to specifically perform the method according to the first aspect.

According to a fourth aspect, an embodiment of the present invention provides a system. The system includes a network functions virtualization orchestrator, a virtual resource orchestrator and allocator, and a virtualized infrastructure manager, where
the network functions virtualization orchestrator is configured to send first information used to indicate to instantiate a VNF to the virtual resource orchestrator and allocator;
the virtual resource orchestrator and allocator is configured to: obtain hardware resource information used to indicate an available resource of a network functions virtualization infrastructure, where the available resource includes a resource of at least one piece of hardware, and the hardware represents a minimum physical resource set used to bear a virtual machine; determine, based on the first information and the hardware resource information, a one-to-one mapping relationship between at least one virtual machine corresponding to the VNF and at least one piece of hardware corresponding to the VNF; and send, to the virtualized infrastructure manager based on the mapping relationship, a request used for requesting to instantiate the virtual machine required by the VNF; and
the virtualized infrastructure manager is configured to instantiate the at least one virtual machine on the at least one piece of hardware based on the request; where
the virtual resource orchestrator and allocator is the network element device according to the second aspect, or the virtual resource orchestrator and allocator is the network element device according to the third aspect.

According to a fifth aspect, an embodiment of the present invention provides a system. The system includes a network functions virtualization orchestrator and a virtualized infrastructure manager, where
the network functions virtualization orchestrator is configured to: receive first information used to indicate to instantiate a VNF; obtain hardware resource information used to indicate an available resource of a network functions virtualization infrastructure, where the available resource includes a resource of at least one piece of hardware, and the hardware represents a minimum physical resource set used to bear a virtual machine; determine, based on the first information and the hardware resource information, a one-to-one mapping relationship between at least one virtual machine corresponding to the VNF and at least one piece of hardware corresponding to the VNF; and send, to the virtualized infrastructure manager based on the mapping relationship, a request used for requesting to instantiate the virtual machine required by the VNF; and
the virtualized infrastructure manager is configured to instantiate the at least one virtual machine on the at least one piece of hardware based on the request; where
the network functions virtualization orchestrator is the network element device according to the second aspect, or the network functions virtualization orchestrator is the network element device according to the third aspect.

According to a sixth aspect, an embodiment of the present invention provides a system. The system includes a network functions virtualization orchestrator and a virtualized infrastructure manager, where
the network functions virtualization orchestrator is configured to send first information used to indicate to instantiate a VNF to the virtualized infrastructure manager; and
the virtualized infrastructure manager is configured to: obtain hardware resource information used to indicate an available resource of a network functions virtualization infrastructure, where the available resource includes a resource of at least one piece of hardware, and the hardware represents a minimum physical resource set used to bear a virtual machine; determine, based on the first information and the hardware resource information, a one-to-one mapping relationship between at least one virtual machine corresponding to the VNF and at least one piece of hardware corresponding to the VNF; and instantiate the at least one virtual machine on the at least one piece of hardware based on the mapping relationship; where
the virtualized infrastructure manager is the network element device according to the second aspect, or the virtualized infrastructure manager is the network element device according to the third aspect.

According to a seventh aspect, an embodiment of the present invention provides a nonvolatile computer-readable storage medium. The computer-readable storage medium is configured to store code for implementing the method according to the first aspect. When the program code is executed by a network element device, the network element device is configured to perform the method according to the first aspect.

According to an eighth aspect, an embodiment of the present invention provides a computer program product. The computer program product includes program instructions. When the computer program product is executed by a network element device, a processor of the network element device performs the method according to the first aspect. The computer program product may be a software package. When the method provided in any possible design of the first aspect needs to be used, the computer program product may be downloaded, and the processor of the network element device executes the computer program product to implement the method according to the first aspect.

It can be learnt that, based on the first information, the hardware resource information, and the like, the first network element provided in this embodiment of the present invention can orchestrate in advance the resources of the plurality of VMs corresponding to the VNF, and determine the instantiation sequence of all the VMs and the one-to-one mapping relationship between the VMs and the hardware resources. Then, based on the mapping relationship and the instantiation sequence, the first network element determines to instantiate, on each piece of specified hardware, the VM mapped to the hardware. Therefore, implementing the embodiments of the present invention can implement accurate deployment of the VMs, improve hardware resource utilization, and improve VM deployment efficiency.

### BRIEF DESCRIPTION OF DRAWINGS

To describe the technical solutions in the embodiments of the present invention or in the background more clearly, the following describes the accompanying drawings required for describing the embodiments of the present invention or the background.
FIG. 1 is a schematic structural diagram of an NFV system architecture used in the current technology;
FIG. 2 is a schematic logic diagram of a process of instantiating a VNF in the current technology;
FIG. 3 is a schematic structural diagram of a system architecture according to an embodiment of the present invention;
FIG. 4 is a schematic flowchart of instantiating a VNF according to an embodiment of the present invention;
FIG. 5 is a schematic flowchart of indicating, by a VROA, a VIM to perform VNF instantiation according to an embodiment of the present invention;
FIG. 6 is another schematic flowchart of indicating, by a VROA, a VIM to perform VNF instantiation according to an embodiment of the present invention;
FIG. 7 is a schematic logic diagram of a process of instantiating a VNF according to an embodiment of the present invention;
FIG. 8 is another schematic flowchart of instantiating a VNF according to an embodiment of the present invention;
FIG. 9 is another schematic flowchart of instantiating a VNF according to an embodiment of the present invention;
FIG. 10 is another schematic flowchart of instantiating a VNF according to an embodiment of the present invention;
FIG. 11 is another schematic flowchart of instantiating a VNF according to an embodiment of the present invention;
FIG. 12 is another schematic flowchart of instantiating a VNF according to an embodiment of the present invention;
FIG. 13 is another schematic flowchart of instantiating a VNF according to an embodiment of the present invention;
FIG. 14 is a schematic flowchart of instantiating a VNF according to an embodiment of the present invention;
FIG. 15 is a schematic structural diagram of a device according to an embodiment of the present invention; and
FIG. 16 is a schematic structural diagram of a device according to an embodiment of the present invention.

### DESCRIPTION OF EMBODIMENTS

The following describes the embodiments of the present invention with reference to the accompanying drawings in the embodiments of the present invention. Terms used in the implementations of the present invention are merely used to describe specific embodiments of the present invention, but are not intended to limit the present invention.

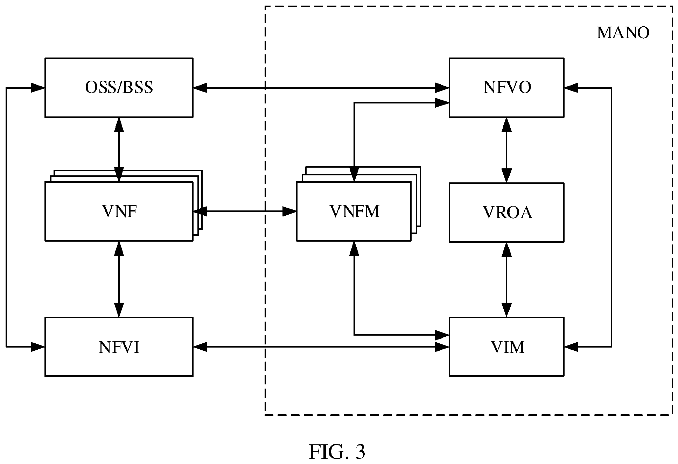

To overcome disadvantages in the current technology, an existing NFV architecture is improved in the embodiments of the present invention. FIG. 3 is a schematic diagram of a system architecture according to an embodiment of the present invention. For the system architecture, a virtual resource orchestrator and allocator (Virtualized Resource Orchestrator & Allocator, VROA) is newly added based on the existing NFV architecture, and is mainly responsible for performing VM orchestration and pre-deployment functions in a VNF instantiation process. The VROA is connected to both an NFVO and a VIM, to implement communication and interaction with the NFVO and VIM. Related network elements are described as follows.

Virtualized network function VNF: The VNF runs on an NFVI. The VNF may be configured to implement service functions of each telecommunications network, map a physical network element to a virtual network element, and divide resources required by the VNF into virtual computing, storage, and network resources. As a software function, the VNF may be deployed on one or more virtual machines (Virtual Machine, VM), and borne by hardware (for example, a board/host) in the NFVI. In some embodiments of the present invention, when the VNF needs to be deployed, a VNF descriptor (Virtualized Network Function Descriptor, VNFD) may be directly uploaded to an NFVO. In some other embodiments, the VNFD may be divided into a configuration file and a specification file. The configuration file may be uploaded to the NFVO, and the specification file may be uploaded to a VROA.

Network functions virtualization orchestrator NFVO: The NFVO may be configured to perform functions of deploying, operating, and managing a VNF and an NFVI corresponding to the VNF. The NFVO can change an orchestration policy used by a VROA. Therefore, dynamic adjustment of an instantiation policy may be performed based on characteristics of the VNF in a multi-VNF co-deployment scenario. Due to existence of the VROA, each time the VNF is instantiated, the NFVO may deliver information about an instantiation policy requirement along with an instantiation request. When different VNFs are being instantiated, the VROA may use different instantiation policies. In a possible embodiment, the NFVO may obtain a VIM capability information through receiving of upload content or proactive query. For implementation of related functions of the NFVO, refer to related descriptions of the NFVO in the following method embodiments.

Virtualized network function manager VNFM: The VNFM may be configured to perform lifecycle management of a VNF, and perform check, verification, modification, and the like. In this embodiment of the present invention, the VNFM may be configured to, for example, verify validity of a VNF instantiation request, verify validity of a parameter required for instantiating a VM, modify/perfect input VNFD data, and check a special requirement on lifecycle management of the VNF. For implementation of related functions of the VNFM, refer to related descriptions of the VNFM in the following method embodiments.

Virtual resource orchestration and deployment allocator VROA: In this embodiment of the present invention, the VROA is responsible for performing VM orchestration and pre-deployment functions in a VNF instantiation process. In a possible embodiment, the VROA may obtain VIM capability information through receiving of upload content or proactive query. After receiving a VM instantiation request of an NFVO, the VROA may obtain accurate hardware resource information of an NFVI by interacting with a VIM, locally generate all VM orchestration and pre-deployment solution information related to a VNF, and then directly deliver a specific hardware location that is of a VM and that needs to be deployed to the VIM, to indicate the VIM to accurately deploy the VM. All VMs in the VNF are orchestrated and pre-deployed before the VIM instantiates the VMs. In some embodiments, the VROA may further indicate the VIM to update a use status of the VIM or hardware, so as to avoid a conflict between a plurality of VROAs in preempting the VIM or hardware resources. In a system architecture, there may be one or more VROAs, and the one or more VROAs may be corresponding to one NFVO. For implementation of related functions of the VROA, refer to related descriptions of the VROA in the following method embodiments.

Virtualized infrastructure manager VIM: The VIM is responsible for managing NFVI resources, and controlling computing, storage, and network resources required by a VNF, and a virtualized function set. In some embodiments of the present invention, the VIM may deploy, based on a VM instantiation sequence (rather than a VM instantiation priority) indicated by a VROA, a VM on hardware (for example, a board/host) that is in an NFVI and that is specified by the VROA. In some embodiments of the present invention, the VIM may send capability information of the VIM to the VROA or an NFVO. In some embodiments of the present invention, the VIM may send the hardware resource information of the NFVI to the VROA. In a system architecture, there may be one or more VIMs, and each VIM may establish a communication connection to one or more VROAs. For example, in some scenarios, there is only one NFVO and one VROA. One VROA may interact with a plurality of VIMs, but the VIMs do not interact with each other. For implementation of related functions of the VIM, refer to related descriptions of the VIM in the following method embodiments.

Network functions virtualization infrastructure NFVI: The NFVI provides virtual/hardware resources required to support VNF execution, including computing resources, storage resources, network resources, a necessary accelerator component, a software layer, other underlying hardware used for virtualization, and the like.

It should be noted that the system architecture shown in FIG. 3 is merely an implementation of this embodiment of the present invention. Based on the technical concept of the present invention, the system architecture may further be modified. In one example, a function of the NFVO and a function of the VROA provided in the present invention may be integrated for implementation. The VROA may be implemented as a function submodule of the NFVO. In another example, a function of the VIM and a function of the VROA provided in the present invention may be integrated for implementation. For example, the VROA may be implemented as a function submodule of the VIM. In still another example, the VROA module may be designed independently of an original MANO module. These specifically modified system architectures can all be implemented according to the technical concept of the present invention, and therefore shall fall within the protection scope of the present invention. The following mainly uses the system architecture shown in FIG. 3 as an example for describing the technical solutions. Specific implementation processes of the other related modified system architectures may be similarly implemented with reference to the embodiment in FIG. 3 and the following method embodiments. Details are not described one by one in this specification.

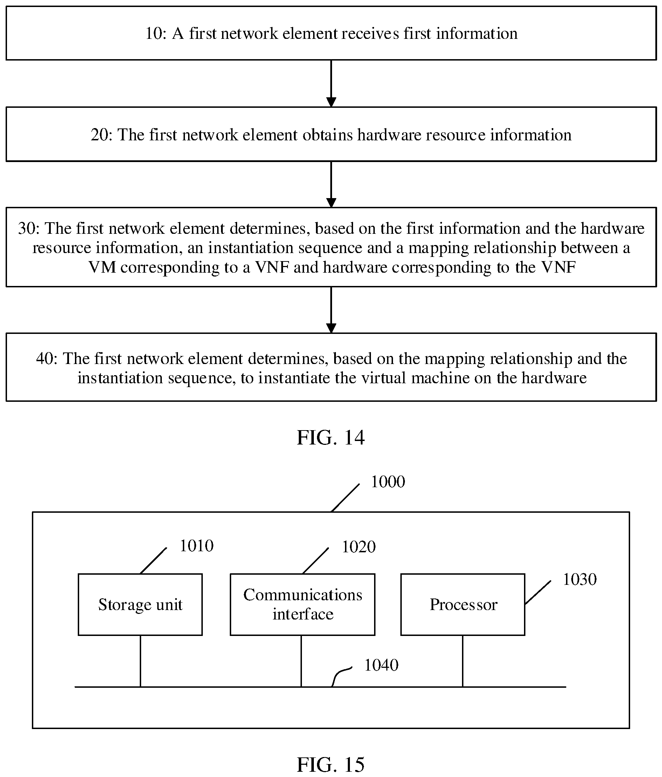

FIG. 14 shows a method for instantiating a VNF according to an embodiment of the present invention. The method includes but is not limited to the following steps.

Step 10: A first network element receives first information used to indicate to instantiate a VNF. The first network element is a network element in a MANO system.

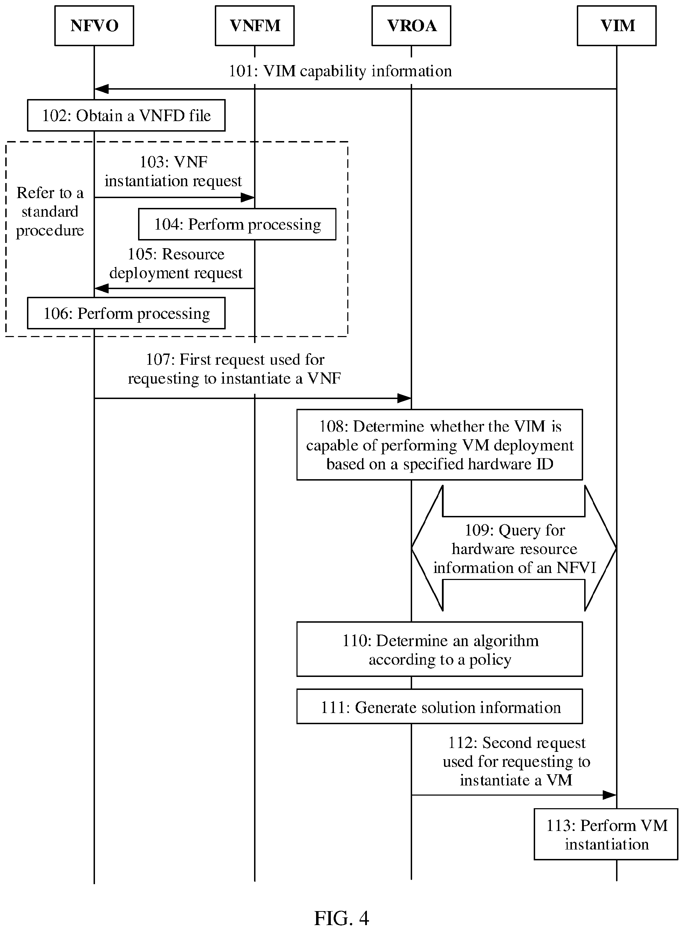

In some embodiments, the first network element is a VROA provided in this embodiment of the present invention. In this case, the first network element receives the first information sent by an NFVO. The first information includes at least one of: at least one virtual machine type, an indication signal of a required resource corresponding to the at least one virtual machine type, instantiation priorities corresponding to the virtual machine types, virtual machine quantities corresponding to the virtual machine types required for instantiating the VNF, or constraint information corresponding to the at least one virtual machine type. In some specific application scenarios, the first information is specifically a first request used for requesting to instantiate the VNF. For related descriptions of the first request, refer to related descriptions in the following embodiments in FIG. 4 to FIG. 13. For brevity of this specification, details are not described herein.

In some embodiments, the first network element is a network element formed by integrating a function of an NFVO and a function of a VROA provided in the present invention. For example, the VROA may be used as a function submodule of the NFVO, and therefore such an NFVO is the first network element. In this case, in some embodiments, the first information may be specifically a VNF descriptor (VNFD). The VNFD describes a configuration template for describing deployment and operation behaviors of the VNF. The first network element receives and correspondingly parses the VNFD. For related information of the VNFD, refer to related descriptions in the following embodiments in FIG. 4 to FIG. 9. For brevity of this specification, details are not described herein. In some other embodiments, the VNFD is divided into configuration information and VM specification information. The first information includes the configuration information. For related information of the configuration information and the VM specification information, refer to related descriptions in the following embodiments in FIG. 4 to FIG. 9. For brevity of this specification, details are not described herein.

In some embodiments, the first network element is a network element formed by integrating a function of a VIM and a function of a VROA provided in the present invention. For example, the VROA may be used as a function submodule of the VIM, and therefore such a VIM is the first network element. In some specific application scenarios, the first information is specifically a first request used for requesting to instantiate the VNF. For related descriptions of the first request, refer to related descriptions in the following embodiments in FIG. 4 to FIG. 13. For brevity of this specification, details are not described herein.

Step 20: The first network element obtains hardware resource information used to indicate an available resource of an NFVI, where the available resource includes a resource of at least one piece of hardware (for example, a host/board), and the hardware represents a minimum physical resource set used to bear a virtual machine.

In some embodiments, when the first network element is the VROA provided in this embodiment of the present invention, the first network element may query for the hardware resource information from the VIM.

In some embodiments, when the first network element is the network element formed by integrating the function of the NFVO and the function of the VROA provided in the present invention, the first network element may query for the hardware resource information from the VIM.

In some embodiments, when the first network element is the network element formed by integrating the function of the VIM and the function of the VROA provided in the present invention, the first network element may directly detect the NFVI to obtain the hardware resource information of the NFVI.

The hardware resource information may include a hardware ID (for example, an ID of a board/host), remaining resources that are of computing resources, storage resources and network resources, an acceleration capability, and the like. The hardware represents the minimum physical resource set used to bear the VM. Particularly, the computing resources in the remaining resources may include NUMA IDs, and a quantity of remaining cores and a remaining memory on each NUMA. The acceleration capability includes a NUMA capability whose value may be N/A, FPGA, GPU, TPU, or the like. In addition, when there are a plurality of VIMs (in a multi-VIM scenario), the hardware resource information may further include VIM IDs, and one or more managed hardware IDs corresponding to each VIM ID.

Step 30: The first network element determines, based on the first information and the hardware resource information, a one-to-one mapping relationship between at least one VM corresponding to the VNF and at least one piece of hardware corresponding to the VNF (for example, a mapping table between VM IDs and hardware IDs). When there are a plurality of VMs corresponding to the VNF, the first network element further determines an instantiation sequence of the plurality of virtual machines. The instantiation sequence is used to represent a sequence in which the plurality of VMs are instantiated.

In a possible embodiment, the first network element may further obtain instantiation policy information and/or VIM capability information, where the instantiation policy information indicates a policy used for instantiating the at least one virtual machine. The policy is, for example, a memory-first policy, a resource utilization-first policy, or a host balance degree-first policy. This facilitates dynamic adjustment of the VM instantiation policy based on characteristics of the VNF, thereby better satisfying a user requirement. The VIM capability information is used to indicate whether the VIM is capable of performing VM instantiation based on a hardware ID indicated by the VROA, so that the first network element performs VNF deployment when determining that the VIM is capable of performing VM instantiation based on the hardware ID indicated by the VROA.

In this case, the first network element specifically determines, based on the first information, the hardware resource information, the instantiation policy information, and/or the VIM capability information, the VM instantiation sequence and the mapping relationship between the VMs corresponding to the VNF and hardware corresponding to the VNF.

Step 40: The first network element determines, based on the mapping relationship and the instantiation sequence, to instantiate the at least one virtual machine on the at least one piece of hardware.

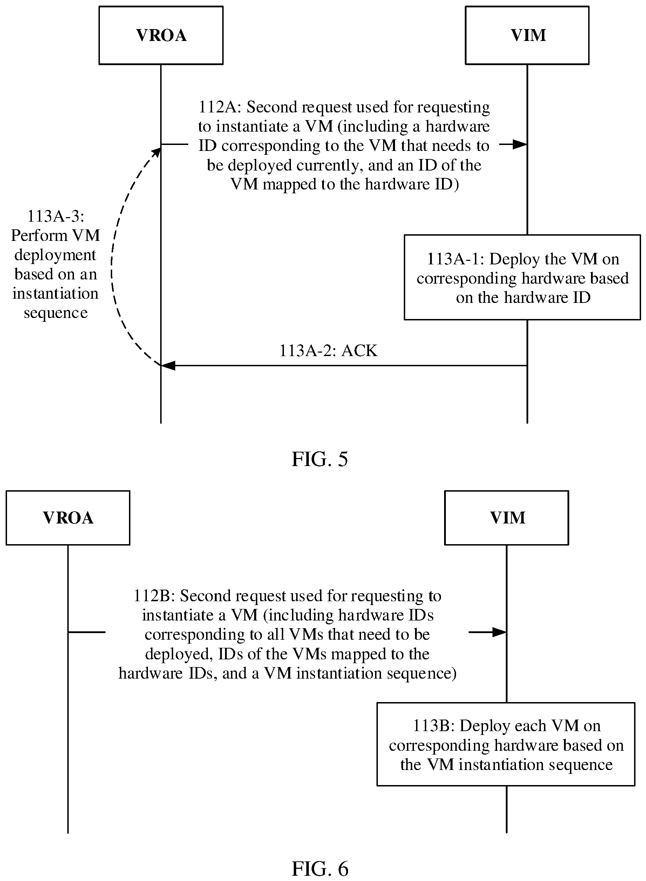

In some embodiments, when the first network element is the VROA provided in this embodiment of the present invention, the first network element may request, based on the mapping relationship and the instantiation sequence, the VIM to perform accurate deployment of the VMs on each piece of specified hardware, thereby implementing smooth rollout of network function services. For a specific implementation process thereof, refer to related descriptions in the following embodiments in FIG. 5 and FIG. 6. Details are not described herein.

In some embodiments, when the first network element is the network element formed by integrating the function of the NFVO and the function of the VROA provided in the present invention, the first network element may request, based on the mapping relationship and the instantiation sequence, the VIM to perform accurate deployment of the VMs on each piece of specified hardware, thereby implementing smooth rollout of network function services.

In some embodiments, when the first network element is the network element formed by integrating the function of the VIM and the function of the VROA provided in the present invention, the first network element may perform, based on the mapping relationship and the instantiation sequence, accurate deployment of the VMs on each piece of specified hardware of the NFVI, thereby implementing smooth rollout of network function services.

It should be noted that specific implementation details of each step in the method embodiment in FIG. 14 may be implemented with reference to the following method embodiments. For brevity of this specification, details are not described herein.

It can be learnt that, based on the first information, the hardware resource information, and the like, the first network element provided in this embodiment of the present invention can orchestrate in advance resources of the plurality of VMs corresponding to the VNF, and determine the instantiation sequence of all the VMs and the one-to-one mapping relationship between the VMs and hardware resources. Then, based on the mapping relationship and the instantiation sequence, the first network element determines to instantiate, on each piece of specified hardware, a VM mapped to the hardware. Therefore, implementing this embodiment of the present invention can implement accurate deployment of the VMs, improve hardware resource utilization, and improve VM deployment efficiency.

The following details some methods for instantiating a VNF that are provided in the embodiments of the present invention, based on the system architecture shown in FIG. 3, that is, by using an example in which the first network element is the VROA.

FIG. 4 shows a method for instantiating a VNF according to an embodiment of the present invention. A specific VNF instantiation procedure includes but is not limited to the following steps.

Step 101: When a system is initially established or a VIM capability of a VIM changes, the VIM may report capability information of the VIM to an NFVO.

The VIM capability information is used to indicate whether the VIM is capable of performing VM instantiation based on a hardware ID indicated by the VROA. In a possible implementation, the VIM capability information may carry a flag field "0" or "1" for indication. "0" may indicate that the VIM does not support VM instantiation performed based on the hardware ID indicated by the VROA, and " 1" may indicate that the VIM supports VM instantiation performed based on the hardware ID indicated by the VROA. In another possible implementation, the VIM capability information may carry a specified indication message (for example, "support/non-support") to indicate whether the VIM is capable of performing VM instantiation based on the hardware ID indicated by the VROA.

Step 102: The NFVO obtains an uploaded VNF descriptor (VNFD).

In a possible embodiment, when a VNF needs to be deployed, the NFVO obtains the VNFD uploaded by an administrator (or receives the VNFD from an OSS/BSS). The VNFD describes a configuration template for describing deployment and operation behaviors of the VNF.

Step 103: After parsing the uploaded VNFD file, the NFVO sends a VNF instantiation request to a VNFM. Specifically, the VNF instantiation request includes all data required for instantiating a VM. Optionally, if the NFVO has completed feasibility check before performing step 103, the VNF instantiation request may further include VIM resource reservation information.

Step 104: After receiving the VNF instantiation request sent by the NFVO, the VNFM performs related processing based on the VNF instantiation request. The related processing includes, for example, verifying validity of the VNF instantiation request, verifying validity of a parameter required for instantiating the VM, modifying/perfecting input VNFD data, and checking a special requirement on lifecycle management of the VNF (for example, performing license check).

Step 105: The VNFM sends a resource deployment request to the NFVO.

Step 106: The NFVO locally performs related processing. The related processing herein may include verifying VM deployment resource data in the VNFD, deployment geographical location selection, correlation check, and the like.

It should be noted that, for a specific implementation process of step 103 to step 106, refer to related descriptions of an existing NFV standard procedure (for example, related descriptions of the clause B.3.1.5 in ETSI NFV-MAN 001). Considering that a person skilled in the art has been familiar with the foregoing implementation details, for brevity of this specification, details are not described herein.

Step 107: The NFVO sends a first request used for requesting to instantiate the VNF to the VROA.

The first request includes at least one of: a plurality of VM types, an indication signal of a required resource corresponding to each of the plurality of VM types, an instantiation priority corresponding to each VM type, a VM quantity corresponding to each VM type required for instantiating the VNF, and constraint information corresponding to the plurality of VM types. The constraint information corresponding to the plurality of VM types includes at least one of: affinity/anti-affinity of a same VM type, affinity/anti-affinity of different VM types, and a physical location constraint on VM instantiation.

In a specific implementation, the first request may include resource lists (Resource lists) of all VMs. The resource lists include information such as the VM types, the indication signal of the required resource corresponding to each VM type (for example, a VM resource required list), metadata (meta-data), the instantiation priority corresponding to each VM type, and the VM quantity corresponding to each VM type required for instantiating the VNF. These pieces of information may be obtained by parsing the VNFD file by the NFVO.

The indication signal of the required resource corresponding to the VM type (for example, a VM resource required list) defines resources that need to be consumed for instantiating the VM of the type, including computing resources, storage resources, network resources, and the like.

Metadata (meta-data) defines special requirements for instantiating the VM. For example, the VM cannot be deployed across a NUMA or across an IO-NUMA. That the VM cannot be deployed across a NUMA means that the VM can use CPU and memory resources on one NUMA. That the VM cannot be deployed across an IO-NUMA means that the VM can use only network resources bound to a NUMA in which the VM resides.

The VM instantiation priority indicates a priority corresponding to each VM type. Generally, VMs of a same type have a same instantiation priority. The VM instantiation priority may be represented by a value. A smaller value indicates a higher priority, and a VM corresponding to a smaller value can be deployed preferentially.

In addition to the foregoing information, in some embodiments, when the NFVO obtains the VIM capability information reported by the VIM, the first request may further include the VIM capability information.

Optionally, in some embodiments, when the NFVO specifies a policy used for instantiating the VNF, the NFVO correspondingly generates VM instantiation policy information. For example, the VM instantiation policy information defines an instantiation policy type expected to be used when a user requests to instantiate the VNF. The instantiation policy type may be, for example, in a form of a list. The list may include a plurality of keywords. The keyword may include information such as a policy (for example, a memory-first policy, a resource utilization-first policy, or a board balance degree-first policy) and a vendor (for example, Huawei, ZTE, Nokia, Ericsson, or another company). It should be noted that, optionally, if the user does not specify the policy requirement, a value of this parameter is N/A. In this case, the first request may further include the VM instantiation policy information.

Step 108: The VROA determines whether the VIM is capable of performing VM deployment based on the hardware ID specified by the VROA.

If the VROA determines, based on the VIM capability information, that the VIM supports VM deployment performed based on the specified hardware ID, the VROA may further perform the following step 109.

If the VROA determines, based on the VIM capability information, that the VIM does not support VM deployment performed based on the specified hardware ID, the VROA may perform another standard step in a prior-art VNF instantiation procedure until the procedure ends. A specific implementation of this scenario is not described in this specification.

Step 109: The VROA queries, from the VIM, for hardware resource information of an NFVI.

Specifically, when the VIM supports VM deployment performed based on the specified hardware ID, the VROA queries, from the VIM, for status information of underlying hardware by using a third request (for example, a query resources information operation) used for requesting to query for the hardware resource information of the NFVI. The VIM feeds back, to the VROA, a response message carrying the hardware resource information of the NFVI. The response message is, for example, a PM resources list. The PM resources list may include a hardware ID (for example, an ID of a board/host), remaining resources that are of computing resources, storage resources, and network resources, an acceleration capability, and the like. The hardware represents a minimum physical resource set used to bear a VM. Particularly, the computing resources in the remaining resources may include NUMA IDs, and a quantity of remaining cores and a remaining memory on each NUMA. The acceleration capability includes a NUMA capability whose value may be N/A, FPGA, GPU, TPU, or the like. In addition, when there are a plurality of VIMs (in a multi-VIM scenario), the PM resources list may further include VIM IDs, and one or more managed hardware IDs corresponding to each VIM ID.

Step 110: Optionally, the VROA determines an algorithm according to the policy specified by the NFVO.

The VROA determines, based on the VM instantiation policy information in the first request, the instantiation algorithm corresponding to the instantiation policy. Each algorithm has one or more public labels (for example, memory first, resource utilization first, Huawei, or Nokia). The NFVO delivers the VM instantiation policy information (including a public label list), and selects a to-be-used instantiation algorithm by using the public label list. In a possible embodiment, if a plurality of algorithms are selected based on an instantiation policy requirement, one of the algorithms is randomly used. If it is found that no algorithm satisfies the requirement through the selection, the VROA may feed back an algorithm selection failure message to the NFVO, and the procedure ends.

Step 111: The VROA generates solution information for instantiating the VNF.

In this embodiment of the present invention, the VROA may generate, based on the first request and the hardware resource information of the NFVI, the solution information for instantiating the VNF. The solution information includes IDs of the plurality of VMs required for instantiating the VNF, a one-to-one mapping relationship between the IDs of the plurality of VMs and the plurality of hardware IDs (for example, a mapping table between VM IDs and hardware IDs), an instantiation sequence of the plurality of VMs, and the like.

Specifically, the VROA may determine the IDs of the plurality of VMs required for instantiating the VNF and the one-to-one mapping relationship between the IDs of the plurality of VMs and the hardware IDs based on the indication signal of the required resource corresponding to each VM type, the hardware resource information of the NFVI, and the constraint information corresponding to the plurality of VM types, and optionally, based on the algorithm corresponding to the instantiation policy. The VROA determines the instantiation sequence of the plurality of VMs based on the instantiation priority corresponding to each VM type and the VM quantity corresponding to each VM type required for instantiating the VNF.

It should be noted that in a possible application scenario, if the VROA cannot generate the solution information, for example, cannot generate the solution information because hardware resources are insufficient, antiaffinity between VMs cannot be satisfied, or the like, the VROA may send a solution generation failure message to the NFVO, and the procedure ends.

Step 112: The VROA sends a second request to the VIM based on the solution information, where the second request is used to request for instantiating the plurality of VMs corresponding to the VNF.

Step 113: The VIM instantiates, on hardware based on the request of the VROA, a VM corresponding to the hardware.

Optionally, in subsequent steps in this embodiment of the present invention, after all the VMs corresponding to the VNF are successfully instantiated, the VROA may feed back an ACK message to the NFVO.

For steps 112 and 113, this embodiment of the present invention may be specifically implemented in a plurality of manners.

For example, in an implementation, referring to FIG. 5, in step 112A, the VROA sequentially sends second requests to the VIM based on the generated solution information and the instantiation sequence of the plurality of VMs. A second request sent each time includes an identifier (ID) of a VM that needs to be instantiated currently, a hardware ID mapped to the ID of the VM that needs to be instantiated currently, and an indication signal (for example, a resource list) of a resource required by the VM that needs to be instantiated currently. It should be noted that the resource list in this step is different from the resource list in the message delivered by the NFVO to the VROA in step 107 in that, the resource list in the current second request does not include information such as the VM instantiation priorities and VM quantity information. In step 113A-1, the VIM instantiates, on current specified hardware of the NFVI based on the second request of the VROA by using a southbound interface, a VM mapped to the hardware. In step 113A-2, after completing current VM deployment, the VIM may feed back ACK information to the VROA. It can be understood that step 113A-3 is subsequently performed: The VROA continues, for a next VM based on the instantiation sequence, a process similar to step 112A, step 113A-1, and step 113A-2, until all the VMs are successfully instantiated. An advantage of this solution is: The VROA needs to send only related information of a current VM to the VIM each time, and therefore a current data sending amount is reduced. The VROA continues to perform next sending only when the VIM feeds back an ACK. If the VIM fails in the current VM deployment in this process, the VIM may feed back a NACK, and the VROA may cancel subsequent sending of VM-related information, and the procedure ends.

For another example, in comparison with the foregoing solution in which the VM instantiation requests are sent cyclically, the VROA may alternatively deliver related information of all the VMs at a time. In this way, the VIM can sequentially instantiate the VMs locally based on the VM instantiation sequence, to reduce reciprocating interactions with the VROA, and improve VM deployment efficiency. In an implementation, referring to FIG. 6, in step 112B, the VROA sends a second request to the VIM. Different from the solution in FIG. 5, the second request includes: IDs of the plurality of VMs required for instantiating the VNF, a one-to-one mapping relationship between the IDs of the plurality of VMs and IDs of the plurality of pieces of hardware, the instantiation sequence of the plurality of VMs, and indication signals (for example, a resource list) of resources required by the plurality of VMs. It should be noted that the resource list in this step is also different from the resource list in the message delivered by the NFVO to the VROA in step 107 in that, the resource list in the current second request does not include information such as the VM instantiation priorities and VM quantity information. In step 113B, the VIM instantiates, on each piece of specified hardware of the NFVI based on the VM instantiation sequence by using a southbound interface, a VM mapped to the hardware.

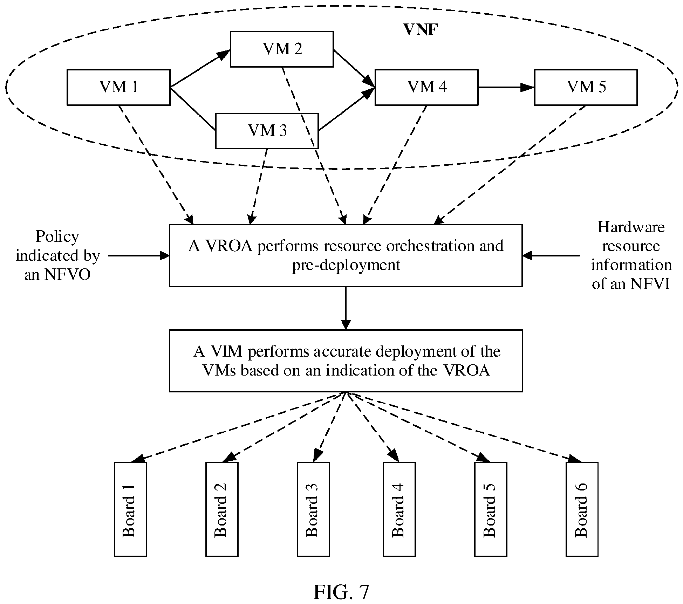

The following briefly describes a specific implementation process of VNF instantiation based on the foregoing method. Referring to FIG. 7, VNFCs in the VNF are borne on different types of VMs (for example, different VMs in the figure) in the NFVI. The VROA provided in this embodiment of the present invention may perform, based on the request of the NFVO and the hardware resource information that is of the NFVI and that is provided by the VIM, resource orchestration and pre-deployment for each VM. Then, the VIM can perform accurate deployment of the VMs on each piece of specified hardware (for example, each specified board in the figure) based on an indication of the VROA, thereby finally implementing smooth rollout of network function services.

It can be learnt that, based on the information provided by the NFVO and the VIM, the VROA provided in this embodiment of this application can orchestrate in advance resources of the plurality of VMs corresponding to the VNF, and determine the instantiation sequence of all the VMs and the one-to-one mapping relationship between the VMs and hardware resources. Then, based on the mapping relationship and the instantiation sequence, the VROA indicates the VIM to instantiate, on each piece of specified hardware, a VM mapped to the hardware. Therefore, implementing this embodiment of the present invention can implement accurate deployment of the VMs, improve hardware resource utilization, and improve VM deployment efficiency. It can also be learnt that, in this embodiment of the present invention, dynamic adjustment of the VM instantiation policy may further be performed based on characteristics of the VNF, thereby better satisfying a user requirement.

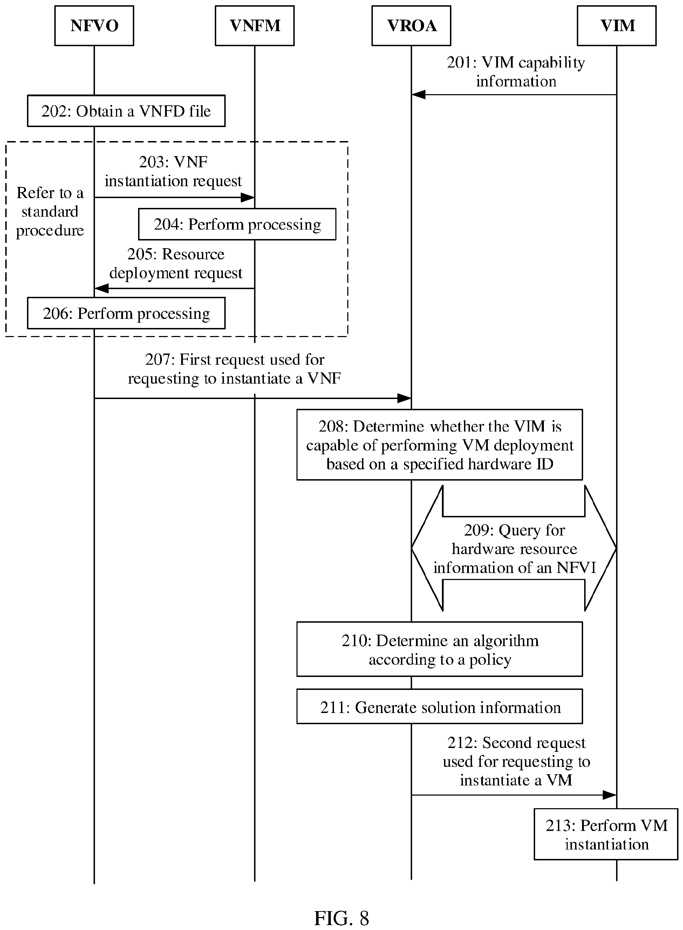

FIG. 8 shows another method for instantiating a VNF according to an embodiment of the present invention. This method is mainly different from the method described in the embodiment in FIG. 4 in that, when a system is initially established or a VIM capability changes, a VIM directly reports capability information of the VIM to a VROA proactively. The method specifically includes but is not limited the following steps.

Step 201: When the system is initially established or the VIM capability changes, the VIM directly reports the capability information of the VIM to the VROA.

The VIM capability information is used to indicate whether the VIM is capable of performing VM instantiation based on a hardware ID indicated by the VROA. In a possible implementation, the VIM capability information may carry a flag field "0" or "1" for indication. "0" may indicate that the VIM does not support VM instantiation performed based on the hardware ID indicated by the VROA, and "1" may indicate that the VIM supports VM instantiation performed based on the hardware ID indicated by the VROA. In another possible implementation, the VIM capability information may carry a specified indication message (for example, "support/non-support") to indicate whether the VIM is capable of performing VM instantiation based on the hardware ID indicated by the VROA.

Step 202: An NFVO obtains an uploaded VNFD. For a specific implementation thereof, refer to descriptions of step 102 in the embodiment in FIG. 4. Details are not described herein again.

Step 203: After parsing the uploaded VNFD file, the NFVO sends a VNF instantiation request to a VNFM. Step 204: After receiving the instantiation request sent by the NFVO, the VNFM performs related processing on the sent message. Step 205: The VNFM sends a resource deployment request to the NFVO. Step 206: The NFVO locally performs related processing.

Likewise, for a specific implementation process of step 203 to step 206, refer to step 103 to step 106 in the embodiment in FIG. 4 and related descriptions of an existing NFV standard procedure (for example, related descriptions of the clause B.3.1.5 in ETSI NFV-MAN 001). Considering that a person skilled in the art has been familiar with the foregoing implementation details, for brevity of this specification, details are not described herein.

Step 207: The NFVO sends a first request used for requesting to instantiate a VNF to the VROA.

The first request includes at least one of: a plurality of VM types, an indication signal of a required resource corresponding to each of the plurality of VM types, an instantiation priority corresponding to each VM type, a VM quantity corresponding to each VM type required for instantiating the VNF, and constraint information corresponding to the plurality of VM types. The constraint information corresponding to the plurality of VM types includes at least one of: affinity/anti-affinity of a same VM type, affinity/anti-affinity of different VM types, and a physical location constraint on VM instantiation.

In a specific implementation, the first request may include resource lists (Resource lists) of all VMs. The resource lists include information such as the VM types, the indication signal of the required resource corresponding to each VM type (for example, a VM resource required list), metadata (meta-data), the instantiation priority corresponding to each VM type, and the VM quantity corresponding to each VM type required for instantiating the VNF. These pieces of information may be obtained by parsing the VNFD file by the NFVO.

Optionally, in some embodiments, when the NFVO specifies a policy used for instantiating the VNF, the NFVO correspondingly generates VM instantiation policy information. For example, the VM instantiation policy information defines an instantiation policy type expected to be used when a user requests to instantiate the VNF. The instantiation policy type may be, for example, in a form of a list. The list may include a plurality of keywords. The keyword may include information such as a policy (for example, a memory-first policy, a resource utilization-first policy, or a board balance degree-first policy) and a vendor (for example, Huawei, ZTE, Nokia, Ericsson, or another company). It should be noted that, optionally, if the user does not specify the policy requirement, a value of this parameter is N/A. In this case, the first request may further include the VM instantiation policy information.

It should be noted that, different from step 107 in the embodiment in FIG. 4, the first request herein does not include the VIM capability information.

Step 208: The VROA determines whether the VIM is capable of performing VM deployment based on the specified hardware ID.

Step 209: If the VIM is capable of performing VM deployment based on the specified hardware ID, the VROA queries, from the VIM, for hardware resource information of an NFVI.

Step 210: Optionally, the VROA determines an algorithm according to the policy specified by the NFVO.

Step 211: The VROA generates solution information for instantiating the VNF.

Step 212: The VROA sends a second request to the virtualized infrastructure manager based on the solution information, where the second request is used to request for instantiating the virtual machine required by the VNF.

Step 213: The VIM deploys, on hardware based on the request of the VROA, a VM corresponding to the hardware.

Likewise, for a specific implementation of step 208 to step 213, refer to detailed descriptions of step 108 to step 113 in the embodiment in FIG. 4. For brevity of this specification, details are not described herein again.

Optionally, after all the VMs corresponding to the VNF are successfully instantiated, the VROA feeds back an ACK message to the NFVO.

It can be learnt that in this embodiment of the present invention, the VIM capability information is directly reported to the VROA after the VIM capability changes, and the first request delivered by the NFVO to the VROA does not need to carry the information. This reduces a data volume of signaling exchanged between the NFVO and the VROA. Likewise, based on the information provided by the NFVO and the VIM, the VROA can orchestrate in advance resources of the plurality of VMs corresponding to the VNF, and determine an instantiation sequence of all the VMs and a one-to-one mapping relationship between the VMs and hardware resources. Then, based on the mapping relationship and the instantiation sequence, the VROA indicates the VIM to instantiate, on each piece of specified hardware, a VM mapped to the hardware. Therefore, implementing this embodiment of the present invention can implement accurate deployment of the VMs, improve hardware resource utilization, and improve VM deployment efficiency. It can also be learnt that, in this embodiment of the present invention, dynamic adjustment of the VM instantiation policy may further be performed based on characteristics of the VNF, thereby better satisfying a user requirement.

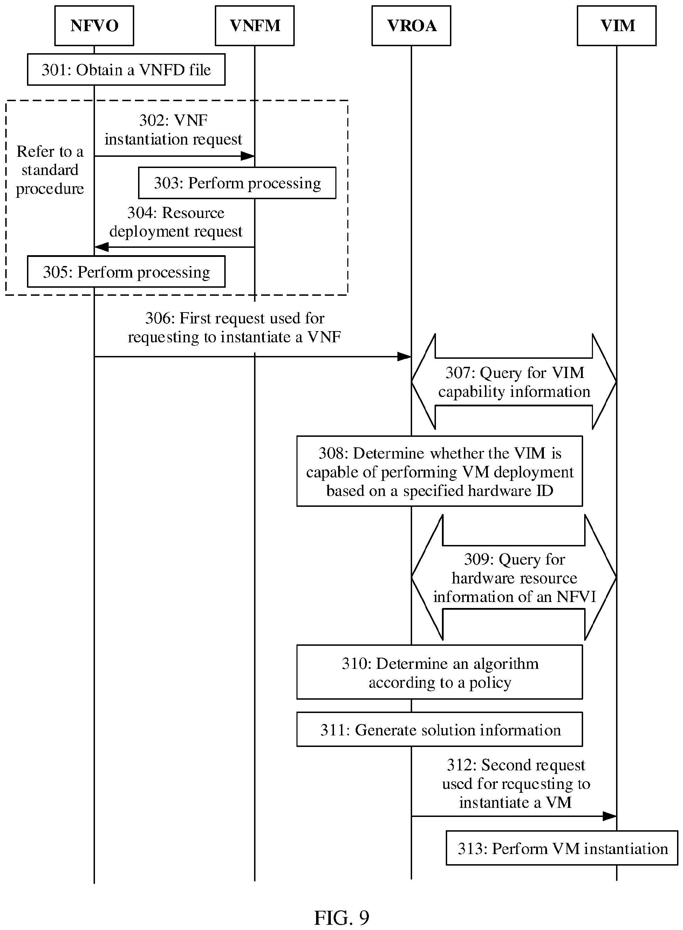

FIG. 9 shows another method for instantiating a VNF according to an embodiment of the present invention. This method is mainly different from the method described in the embodiment in FIG. 4 in that, a VROA proactively queries for VIM capability information after receiving a first request of an NFVO, without a need to deliver the VIM capability information by the NFVO. The method specifically includes but is not limited the following steps.

Step 301: The NFVO obtains an uploaded VNFD. For a specific implementation thereof, refer to descriptions of step 102 in the embodiment in FIG. 4. Details are not described herein again.

Step 302: After parsing the uploaded VNFD file, the NFVO sends a VNF instantiation request to a VNFM. Step 303: After receiving the instantiation request sent by the NFVO, the VNFM performs related processing on the sent message. Step 304: The VNFM sends a resource deployment request to the NFVO. Step 305: The NFVO locally performs related processing.

Likewise, for a specific implementation process of step 302 to step 305, refer to step 103 to step 106 in the embodiment in FIG. 4 and related descriptions of an existing NFV standard procedure (for example, related descriptions of the clause B.3.1.5 in ETSI NFV-MAN 001). Considering that a person skilled in the art has been familiar with the foregoing implementation details, for brevity of this specification, details are not described herein.

Step 306: The NFVO sends the first request used for requesting to instantiate a VNF to the VROA.

The first request includes at least one of: a plurality of VM types, an indication signal of a required resource corresponding to each of the plurality of VM types, an instantiation priority corresponding to each VM type, a VM quantity corresponding to each VM type required for instantiating the VNF, and constraint information corresponding to the plurality of VM types. The constraint information corresponding to the plurality of VM types includes at least one of: affinity/anti-affinity of a same VM type, affinity/anti-affinity of different VM types, and a physical location constraint on VM instantiation.

In a specific implementation, the first request may include resource lists (Resource lists) of all VMs. The resource lists include information such as the VM types, the indication signal of the required resource corresponding to each VM type (for example, a VM resource required list), metadata (meta-data), the instantiation priority corresponding to each VM type, and the VM quantity corresponding to each VM type required for instantiating the VNF. These pieces of information may be obtained by parsing the VNFD file by the NFVO.

Optionally, in some embodiments, when the NFVO specifies a policy used for instantiating the VNF, the NFVO correspondingly generates VM instantiation policy information. For example, the VM instantiation policy information defines an instantiation policy type expected to be used when a user requests to instantiate the VNF. The instantiation policy type may be, for example, in a form of a list. The list may include a plurality of keywords. The keyword may include information such as a policy (for example, a memory-first policy, a resource utilization-first policy, or a board balance degree-first policy) and a vendor (for example, Huawei, ZTE, Nokia, Ericsson, or another company). It should be noted that, optionally, if the user does not specify the policy requirement, a value of this parameter is N/A. In this case, the first request may further include the VM instantiation policy information.

It should be noted that, different from step 107 in the embodiment in FIG. 4, the first request herein does not include the VIM capability information.

Step 307: The VROA queries for the VIM capability information from a VIM.

After receiving the first request that is used for requesting to instantiate the VNF and that is sent by the NFVO, the VROA sends a status query request to the VIM. The VIM feeds back the capability information of the VIM to the VROA. Likewise, the VIM capability information is used to indicate whether the VIM is capable of performing VM instantiation based on a hardware ID indicated by the VROA. In a possible implementation, the VIM capability information may carry a flag field "0" or "1" for indication. "0" may indicate that the VIM does not support VM instantiation performed based on the hardware ID indicated by the VROA, and "1" may indicate that the VIM supports VM instantiation performed based on the hardware ID indicated by the VROA. In another possible implementation, the VIM capability information may carry a specified indication message (for example, "support/nonsupport") to indicate whether the VIM is capable of performing VM instantiation based on the hardware ID indicated by the VROA.

Step 308: The VROA determines whether the VIM is capable of performing VM deployment based on the specified hardware ID.

Step 309: If the VIM is capable of performing VM deployment based on the specified hardware ID, the VROA queries, from the VIM, for hardware resource information of an NFVI.

Step 310: Optionally, the VROA determines an algorithm according to the policy specified by the NFVO.

Step 311: The VROA generates solution information for instantiating the VNF.

Step 312: The VROA sends a second request to the virtualized infrastructure manager based on the solution information, where the second request is used to request for instantiating the virtual machine required by the virtualized network function.

Step 313: The VIM deploys, on hardware based on the request of the VROA, a VM corresponding to the hardware.

Likewise, for a specific implementation of step 308 to step 313, refer to detailed descriptions of step 108 to step 113 in the embodiment in FIG. 4. For brevity of this specification, details are not described herein again.

Optionally, after all the VMs corresponding to the VNF are successfully instantiated, the VROA feeds back an ACK message to the NFVO.

It can be learnt that in this embodiment of the present invention, after receiving the first request that is used for requesting to instantiate the VNF and that is sent by the NFVO, the VROA proactively requests the VIM capability information, and the first request delivered by the NFVO to the VROA does not need to carry the information. This reduces a data volume of signaling exchanged between the NFVO and the VROA. Likewise, based on the information provided by the NFVO and the VIM, the VROA can orchestrate in advance resources of the plurality of VMs corresponding to the VNF, and determine an instantiation sequence of all the VMs and a one-to-one mapping relationship between the VMs and hardware resources. Then, based on the mapping relationship and the instantiation sequence, the VROA indicates the VIM to instantiate, on each piece of specified hardware, a VM mapped to the hardware. Therefore, implementing this embodiment of the present invention can implement accurate deployment of the VMs, improve hardware resource utilization, and improve VM deployment efficiency. It can also be learnt that, in this embodiment of the present invention, dynamic adjustment of the VM instantiation policy may further be performed based on characteristics of the VNF, thereby better satisfying a user requirement.

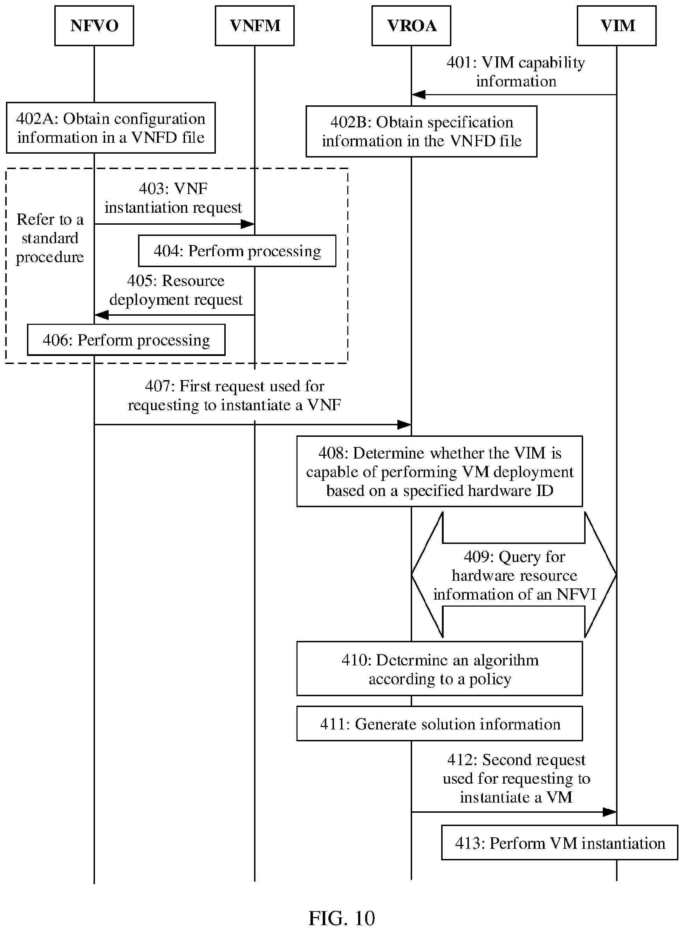

FIG. 10 shows another method for instantiating a VNF according to an embodiment of the present invention. In the methods described in the embodiments in FIG. 4, FIG. 8, and FIG. 9, the VNFD is parsed by the NFVO; and when the NFVO delivers the first request used for requesting to instantiate the VNF, the first request carries the indication signal of the resource required for instantiating the VM and the metadata (meta-data), where a volume of this part of data accounts for most of the first request message. In the embodiment in FIG. 10, the method is provided in which a VNFD is divided into configuration information and specification information and then the configuration information and the specification information are independently parsed by an NFVO and a VROA, respectively. This further reduces a data volume of signaling exchanged between the NFVO and the VROA. The method includes but is not limited to the following steps.

Step 401: When a system is initially established or a VIM capability of a VIM changes, the VIM may report capability information of the VIM to the VROA. For a specific implementation thereof, refer to descriptions of step 201 in the embodiment in FIG. 8. Details are not described herein again.

Step 402A: The NFVO obtains the configuration information in the VNFD file. Step 402B: The VROA obtains the VM specification information in the VNFD file.

In other words, the original VNFD is divided into two parts: the configuration information and the VM specification information. The configuration information and the VM specification information are respectively uploaded to the NFVO and the VROA and are independently parsed by the NFVO and the VROA, respectively.

In some embodiments, the VM specification information includes all related information required by the VIM to instantiate VMs, such as resource lists (Resource lists) of all the VMs and constraint information corresponding to a plurality of VM types. The resource lists include information such as VM types, an indication signal of a required resource corresponding to each VM type (for example, a VM resource required list), metadata (meta-data), an instantiation priority corresponding to each VM type, and a VM quantity corresponding to each VM type required for instantiating a VNF. The constraint information corresponding to the plurality of VM types includes at least one of: affinity/anti-affinity of a same VM type, affinity/anti-affinity of different VM types, and a physical location constraint on VM instantiation.

Correspondingly, the configuration information includes information in the original VNFD other than the VM specification information, for example, a type of the VNF, a version number, and a required software package.

Step 403: After parsing the uploaded configuration information, the NFVO sends a VNF instantiation request to a VNFM. Step 404: After receiving the instantiation request sent by the NFVO, the VNFM performs related processing on the sent message. Step 405: The VNFM sends a resource deployment request to the NFVO. Step 406: The NFVO locally performs related processing.

Likewise, for a specific implementation process of step 403 to step 406, refer to step 103 to step 106 in the embodiment in FIG. 4 and related descriptions of an existing NFV standard procedure (for example, related descriptions of the clause B.3.1.5 in ETSI NFV-MAN 001). Considering that a person skilled in the art has been familiar with the foregoing implementation details, for brevity of this specification, details are not described herein.

Step 407: The NFVO sends a first request used for requesting to instantiate a VNF to the VROA.

Different from step 107 in the embodiment in FIG. 4, the first request includes VNF identification information (for example, a VNF name), but does not include the VIM capability information and the VM specification information (for example, the resource lists of all the VMs and the constraint information corresponding to the plurality of VM types). The VNF name indicates a name of a VNF that needs to be deployed currently. It should be noted that the VNF name herein needs to be consistent with a VNF name defined in the VM specification information in the VNFD. This is conducive to subsequently determining, by the VROA based on the VNF name, the VM specification information corresponding to the VNF.

Optionally, in some embodiments, when the NFVO specifies a policy used for instantiating the VNF, the NFVO correspondingly generates VM instantiation policy information. In this case, the first request may further include the VM instantiation policy information.

Step 408: The VROA determines whether the VIM is capable of performing VM deployment based on the specified hardware ID.

Step 409: If the VIM is capable of performing VM deployment based on the specified hardware ID, the VROA queries, from the VIM, for hardware resource information of an NFVI.

Step 410: Optionally, the VROA determines an algorithm according to the policy specified by the NFVO.

Step 411: The VROA generates solution information for instantiating the VNF.

Step 412: The VROA sends a second request to the virtualized infrastructure manager based on the solution information, where the second request is used to request for instantiating the virtual machine required by the virtualized network function.

Step 413: The VIM deploys, on hardware based on the request of the VROA, a VM corresponding to the hardware.

Likewise, for a specific implementation of step 408 to step 413, refer to detailed descriptions of step 108 to step 113 in the embodiment in FIG. 4. For brevity of this specification, details are not described herein again.

Optionally, after all the VMs corresponding to the VNF are successfully instantiated, the VROA feeds back an ACK message to the NFVO.

It can be learnt that in this embodiment of the present invention, the VNFD is divided into the configuration information and the VM specification information, and then the configuration information and the VM specification information are respectively uploaded to the NFVO and the VROA and are independently parsed by the NFVO and the VROA, respectively. This greatly reduces a data volume of signaling exchanged between the NFVO and the VROA in a VNF instantiation process. Likewise, based on the information provided by the NFVO and the VIM, the VROA can orchestrate in advance resources of the plurality of VMs corresponding to the VNF, and determine an instantiation sequence of all the VMs and a one-to-one mapping relationship between the VMs and hardware resources. Then, based on the mapping relationship and the instantiation sequence, the VROA indicates the VIM to instantiate, on each piece of specified hardware, a VM mapped to the hardware. Therefore, implementing this embodiment of the present invention can implement accurate deployment of the VMs, improve hardware resource utilization, and improve VM deployment efficiency. It can also be learnt that, in this embodiment of the present invention, dynamic adjustment of the VM instantiation policy may further be performed based on characteristics of the VNF, thereby better satisfying a user requirement.

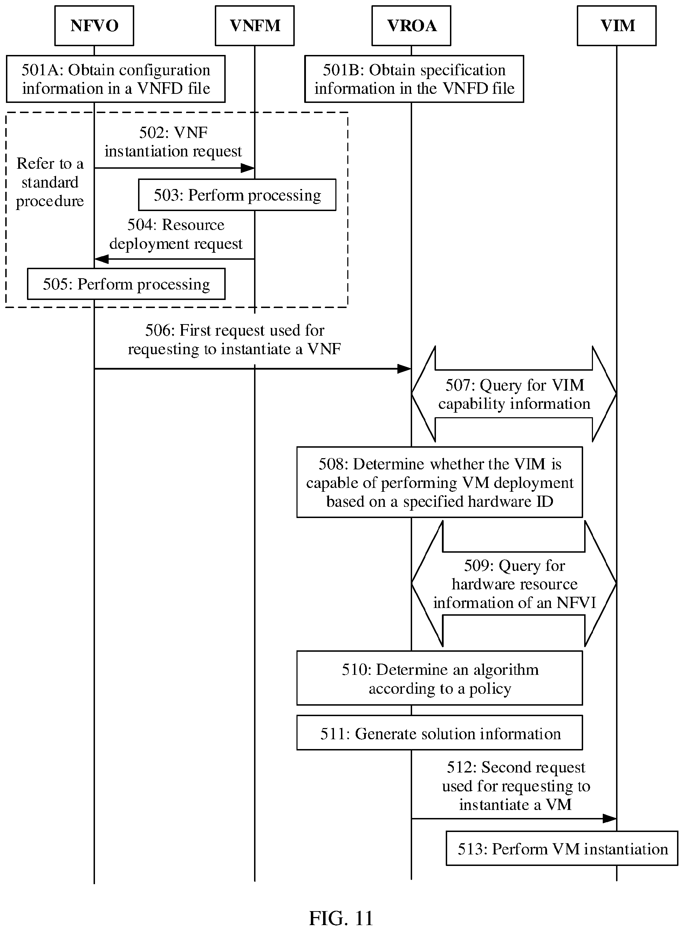

FIG. 11 shows another method for instantiating a VNF according to an embodiment of the present invention. This method is mainly different from the method described in the embodiment in FIG. 10 in that, a VROA proactively queries for VIM capability information after receiving a first request of an NFVO, without a need to report the VIM capability information by a VIM in advance. The method specifically includes but is not limited the following steps.

Step 501A: The NFVO obtains configuration information in a VNFD file. Step 501B: The VROA obtains specification information in the VNFD file.

For a specific implementation process of step 501A and step 501B, refer to detailed descriptions of step 402A and step 402B in the embodiment in FIG. 10. Details are not described herein again.

Step 502: After parsing the uploaded configuration information, the NFVO sends a VNF instantiation request to a VNFM. Step 503: After receiving the instantiation request sent by the NFVO, the VNFM performs related processing on the sent message. Step 504: The VNFM sends a resource deployment request to the NFVO. Step 505: The NFVO locally performs related processing.

Likewise, for a specific implementation process of step 502 to step 505, refer to step 103 to step 106 in the embodiment in FIG. 4 and related descriptions of an existing NFV standard procedure (for example, related descriptions of the clause B.3.1.5 in ETSI NFV-MAN 001). Considering that a person skilled in the art has been familiar with the foregoing implementation details, for brevity of this specification, details are not described herein.

Step 506: The NFVO sends the first request used for requesting to instantiate a VNF to the VROA. For a specific implementation thereof, refer to descriptions of step 407 in the embodiment in FIG. 10. Details are not described herein again.

Step 507: The VROA queries for the VIM capability information from the VIM.

After receiving the first request that is used for requesting to instantiate the VNF and that is sent by the NFVO, the VROA sends a status query request to the VIM. The VIM feeds back the capability information of the VIM to the VROA. Likewise, the VIM capability information is used to indicate whether the VIM is capable of performing VM instantiation based on a hardware ID indicated by the VROA. In a possible implementation, the VIM capability information may carry a flag field "0" or "1" for indication. "0" may indicate that the VIM does not support VM instantiation performed based on the hardware ID indicated by the VROA, and " 1" may indicate that the VIM supports VM instantiation performed based on the hardware ID indicated by the VROA. In another possible implementation, the VIM capability information may carry a specified indication message (for example, "support/nonsupport") to indicate whether the VIM is capable of performing VM instantiation based on the hardware ID indicated by the VROA.

Step 508: The VROA determines whether the VIM is capable of performing VM deployment based on the specified hardware ID.

Step 509: If the VIM is capable of performing VM deployment based on the specified hardware ID, the VROA queries, from the VIM, for hardware resource information of an NFVI.

Step 510: Optionally, the VROA determines an algorithm according to a policy specified by the NFVO.

Step 511: The VROA generates solution information for instantiating the VNF.

Step 512: The VROA sends a second request to the virtualized infrastructure manager based on the solution information, where the second request is used to request for instantiating the virtual machine required by the virtualized network function.

Step 513: The VIM deploys, on hardware based on the request of the VROA, a VM corresponding to the hardware.

Likewise, for a specific implementation of step 508 to step 513, refer to detailed descriptions of step 108 to step 113 in the embodiment in FIG. 4. For brevity of this specification, details are not described herein again.

Optionally, after all the VMs corresponding to the VNF are successfully instantiated, the VROA feeds back an ACK message to the NFVO.

It can be learnt that in this embodiment of the present invention, the VNFD is divided into the configuration information and the VM specification information, and then the configuration information and the VM specification information are respectively uploaded to the NFVO and the VROA and are independently parsed by the NFVO and the VROA, respectively. This greatly reduces a data volume of signaling exchanged between the NFVO and the VROA in a VNF instantiation process. After receiving the instantiation request of the NFVO, the VROA proactively queries for the VIM capability information, without a need to proactively report the information by the VIM in advance. Likewise, based on the information provided by the NFVO and the VIM, the VROA can orchestrate in advance resources of the plurality of VMs corresponding to the VNF, and determine an instantiation sequence of all the VMs and a one-to-one mapping relationship between the VMs and hardware resources. Then, based on the mapping relationship and the instantiation sequence, the VROA indicates the VIM to instantiate, on each piece of specified hardware, a VM mapped to the hardware. Therefore, implementing this embodiment of the present invention can implement accurate deployment of the VMs, improve hardware resource utilization, and improve VM deployment efficiency. It can also be learnt that, in this embodiment of the present invention, dynamic adjustment of the VM instantiation policy may further be performed based on characteristics of the VNF, thereby better satisfying a user requirement.

Some of the foregoing method embodiments are applicable to a scenario in which there is only one NFVO and one VROA. However, in a scenario in which there are a plurality of VROAs, contention for underlying hardware resources is inevitable in a process of instantiating different VNFs. To avoid a series of problems caused by resource preemption, this embodiment of the present invention further provides some manners for avoiding resource preemption.

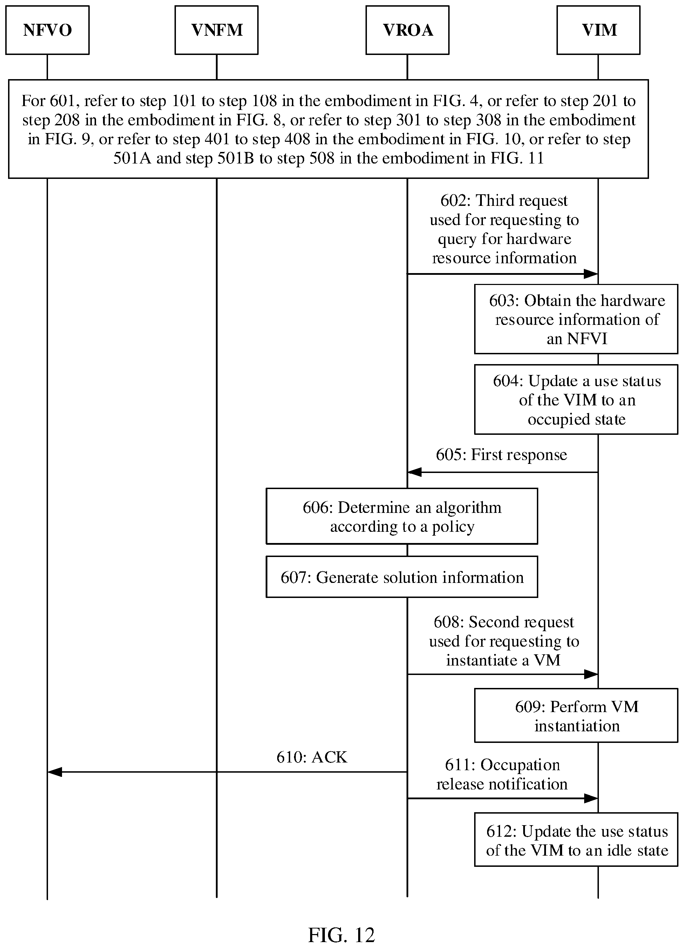

FIG. 12 shows another method for instantiating a VNF according to an embodiment of the present invention. This method is mainly different from some of the foregoing method embodiments in that, in a scenario in which there are a plurality of VROAs, a VIM may have two working states: a reserve (reserve) state and a free (free) state. The reserve state indicates that a use status of the VIM is an occupied state. In this case, the VIM provides a VM instantiation service only for a current VROA, but does not provide a VM instantiation service for other VROAs. The free state indicates that the VIM is in an idle state. In this case, the VIM can provide a service for any VROA. The VIM may switch between the two states by interacting with the VROA. For better description of this solution, it is considered by default that the VIM is in the free state before the VNF is instantiated. The method may include but is not limited the following steps.

In some embodiments, for an implementation process of step 601, refer to descriptions of step 101 to step 108 in the embodiment in FIG. 4. In some embodiments, for an implementation process of step 601, refer to descriptions of step 201 to step 208 in the embodiment in FIG. 8. In some embodiments, for an implementation process of step 601, refer to descriptions of step 301 to step 308 in the embodiment in FIG. 9. In some embodiments, for an implementation process of step 601, refer to descriptions of step 401 to step 408 in the embodiment in FIG. 10. In some embodiments, for an implementation process of step 601, refer to descriptions of step 501A and step 501B to step 508 in the embodiment in FIG. 11. For brevity of this specification, details are not described herein again.

Step 602: The VROA sends a third request used for requesting to query for hardware resource information to the VIM.

When the VIM is capable of performing VM deployment based on the specified hardware ID, the VROA sends the third request used for requesting to query for the hardware resource information to the VIM, for example, queries for underlying hardware resource information from the VIM by using a query resources information operation. Specifically, the third request includes reservation indication (reservation indicator) information, and the information is used as an independent identifier of the VROA that sends the message. In some possible implementations, a VROA ID may be directly used as the reservation indication information. In some other possible implementations, a randomly generated random number may be used as the reservation indication information.

Step 603: The VIM obtains the hardware resource information of an NFVI.

Specifically, the hardware resource information (for example, a PM resources list) may include a hardware ID (for example, an ID of a board/host), remaining resources that are of computing resources, storage resources and network resources, an acceleration capability, and the like. Hardware represents a minimum physical resource set used to bear a VM. Particularly, the computing resources in the remaining resources may include NUMA IDs, and a quantity of remaining cores and a remaining memory on each NUMA. The acceleration capability includes a NUMA capability whose value may be N/A, FPGA, GPU, TPU, or the like. In addition, when there are a plurality of VIMs (in a multi-VIM scenario), the PM resources list may further include VIM IDs, and one or more managed hardware IDs corresponding to each VIM ID.

Step 604: The VIM updates the use status of the VIM to the reserve state.

Specifically, if the current status of the VIM is the free state, the VIM modifies the status of the VIM to the reserve state, and generates corresponding first use status information. The first use status information indicates that the use status of the VIM has changed from the free state to the reserve state. In a specific implementation, the first use status information is, for example, a reservation identifier (Reservation ID), and the reservation ID may be a group of randomly generated numerals. In another specific implementation, the first use status information may alternatively be ACK information.

It should be noted that in a possible application scenario, if the current status of the VIM has been the reserve state, it indicates that the VIM is serving other VROAs in this case, and cannot provide a service for the current VROA. Then, the VIM does not perform step 604, and the VIM directly feeds back NACK information to the VROA. Subsequently, after the VROA receives the NACK or a feedback request times out, the VROA may perform random backoff for a periodicity of time and then retry. The random backoff time usually needs to be longer than a VNF instantiation time, and may be set by a user. Details are not described herein.

Step 605: The VIM feeds back a first response to the VROA.

The VIM feeds back the first response information to the VROA based on the third request of the VROA. Based on the first use status information generated in step 604, correspondingly, in some possible embodiments, the first response information may include the hardware resource information (for example, a PM resources list) and the reservation ID. In some possible embodiments, the first response information may include the hardware resource information (for example, a PM resources list) and the ACK information. The PM resources list may include a hardware ID (for example, an ID of a board/host), remaining resources that are of computing resources, storage resources and network resources, an acceleration capability, and the like. The hardware represents the minimum physical resource set used to bear the VM. Particularly, the computing resources in the remaining resources may include NUMA IDs, and a quantity of remaining cores and a remaining memory on each NUMA. The acceleration capability includes a NUMA capability whose value may be N/A, FPGA, GPU, TPU, or the like. In addition, when there are a plurality of VIMs (in a multi-VIM scenario), the PM resources list may further include VIM IDs, and one or more managed hardware IDs corresponding to each VIM ID.

It should be noted that in a possible application scenario, in step 604, after modifying the status of the VIM from the free state to the reserve state, the VIM may alternatively not generate the first use status information. In this case, the first response fed back by the VIM to the VROA correspondingly does not include the first use status information, and includes only the hardware resource information.

Step 606: Optionally, the VROA determines an algorithm according to the policy specified by the NFVO.

Step 607: The VROA generates solution information for instantiating the VNF.

Step 608: The VROA sends a second request to the virtualized infrastructure manager based on the solution information, where the second request is used to request for instantiating the virtual machine required by the virtualized network function.

Step 609: The VIM deploys, on hardware based on the request of the VROA, a VM corresponding to the hardware.

Likewise, for a specific implementation of step 606 to step 609, refer to detailed descriptions of step 110 to step 113 in the embodiment in FIG. 4. For brevity of this specification, details are not described herein again.

Step 610: After all the VMs corresponding to the VNF are successfully instantiated, the VROA feeds back an ACK message to the NFVO.

Step 611: Optionally, the VROA notifies the VIM of releasing occupation. Specifically, the VROA sends a resource reservation release message to the VIM, where the message may carry the reservation ID returned by the VIM in step 605.

Step 612: After receiving the occupation release notification, the VIM modifies the status of the VIM from the reserve state to the free state. In this way, the VIM can provide a service for other VROAs in response to a related request of the other VROAs for querying for the hardware resource information.

It can be learnt that in this embodiment of the present invention, when the VROA needs to query for the hardware resource information, the VROA and the VIM may confirm identities of each other by using the reservation identifier (Reservation ID), and the VIM updates the status of the VIM and then stores an updated status. Based on the information provided by the NFVO and the VIM, the VROA can orchestrate in advance resources of the plurality of VMs corresponding to the VNF, and determine an instantiation sequence of all the VMs and a one-to-one mapping relationship between the VMs and hardware resources. Then, based on the mapping relationship and the instantiation sequence, the VROA indicates the VIM to instantiate, on each piece of specified hardware, a VM mapped to the hardware. Therefore, implementing this embodiment of the present invention can implement accurate deployment of the VMs, improve hardware resource utilization, and improve VM deployment efficiency. After VNF deployment is completed, the VROA interacts with the VIM to release the occupied state of the VIM. Therefore, in this embodiment of the present invention, a single VIM can serve only one VROA at the same time. This avoids resource preemption in a scenario in which there are a plurality of VROAs, thereby ensuring smooth VNF deployment.

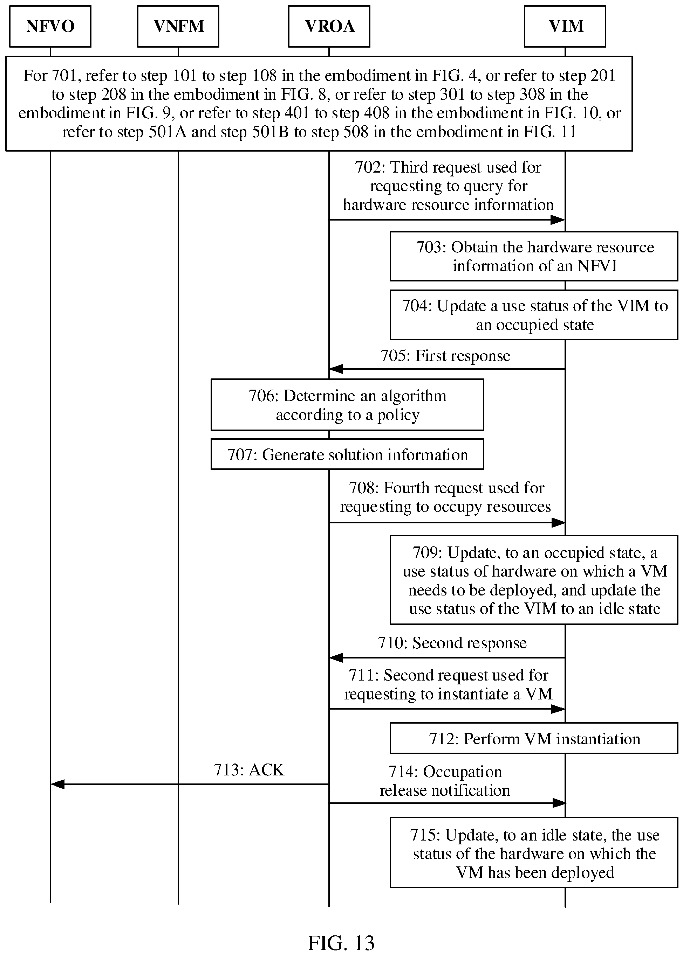

FIG. 13 shows another method for instantiating a VNF according to an embodiment of the present invention. This method is mainly different from the embodiment in FIG. 12 in that, in a scenario in which there are a plurality of VROAs, in the embodiment in FIG. 12, after the VROA sends the third request to the VIM, the VIM directly updates the status of the VIM to the reserve state. This means that at a current instantiation stage, none of the hardware resources managed by the VIM can be used by other VROAs. In the embodiment in FIG. 13, a VIM has two working states (a reserve state and a free state), and working states of each piece of hardware (for example, a board/host) managed by the VIM may also be classified into a reserve (reserve) state and a free (free) state. A status change of each piece of hardware may be recorded and stored by the VIM. It can be understood that if a status of a piece of hardware is a reserve state, it indicates that a use status of the hardware is an occupied state. In this case, the hardware provides a deployment service only for a current VROA, but does not provide a deployment service for other VROAs. If a status of a piece of hardware is a free state, it indicates that the hardware is in an idle state. In this case, the hardware can provide a service for any VROA. The VIM may interact with the VROA, to change the status of the VIM and modify hardware-related status information stored in the VIM. For better description of this solution, it is considered by default that the VIM is in the free state and some hosts are in a free state before the VNF is instantiated. The method may include but is not limited the following steps.

In some embodiments, for an implementation process of step 701, refer to descriptions of step 101 to step 108 in the embodiment in FIG. 4. In some embodiments, for an implementation process of step 701, refer to descriptions of step 201 to step 208 in the embodiment in FIG. 8. In some embodiments, for an implementation process of step 701, refer to descriptions of step 301 to step 308 in the embodiment in FIG. 9. In some embodiments, for an implementation process of step 701, refer to descriptions of step 401 to step 408 in the embodiment in FIG. 10. In some embodiments, for an implementation process of step 701, refer to descriptions of step 501A and step 501B to step 508 in the embodiment in FIG. 11. For brevity of this specification, details are not described herein again.

It should be noted that in an implementation process of step 701, because hardware whose hardware state has been marked as a reserve state does not provide a service externally, the hardware resource information (remaining resources) fed back by the VIM to the VROA does not include related information of the hardware whose hardware state is the reserve state.

Step 702: The VROA sends a third request used for requesting to query for hardware resource information to the VIM.

When the VIM is capable of performing VM deployment based on the specified hardware ID, the VROA sends the third request used for requesting to query for the hardware resource information to the VIM, for example, queries for underlying hardware resource information from the VIM by using a query resources information operation. Specifically, the third request includes reservation indication (reservation indicator) information, and the information is used as an independent identifier of the VROA that sends the message. In some possible implementations, a VROA ID may be directly used as the reservation indication information. In some other possible implementations, a randomly generated random number may be used as the reservation indication information.

Step 703: The VIM obtains the hardware resource information of an NFVI.

Specifically, the hardware resource information (for example, a PM resources list) may include a hardware ID (for example, an ID of a board/host), remaining resources that are of computing resources, storage resources and network resources, an acceleration capability, and the like. The hardware represents a minimum physical resource set used to bear a VM. Particularly, the computing resources in the remaining resources may include NUMA IDs, and a quantity of remaining cores and a remaining memory on each NUMA. The acceleration capability includes a NUMA capability whose value may be N/A, FPGA, GPU, TPU, or the like. In addition, when there are a plurality of VIMs (in a multi-VIM scenario), the PM resources list may further include VIM IDs, and one or more managed hardware IDs corresponding to each VIM ID.

Step 704: The VIM updates the use status of the VIM to the reserve state.

Specifically, if the current status of the VIM is the free state, the VIM modifies the status of the VIM to the reserve state, and generates corresponding first use status information. The first use status information indicates that the use status of the VIM has changed from the free state to the reserve state. In a specific implementation, the first use status information is, for example, a reservation identifier (Reservation ID), and the reservation ID may be a group of randomly generated numerals. In another specific implementation, the first use status information may alternatively be ACK information.

It should be noted that in a possible application scenario, if the current status of the VIM has been the reserve state, it indicates that the VIM is serving other VROAs in this case, and cannot provide a service for the current VROA. Then, the VIM does not perform step 604, and the VIM directly feeds back NACK information to the VROA. Subsequently, after the VROA receives the NACK or a feedback request times out, the VROA may perform random backoff for a periodicity of time and then retry. The random backoff time usually needs to be longer than a VNF instantiation time, and may be set by a user. Details are not described herein.

Step 705: The VIM feeds back a first response to the VROA.

The VIM feeds back the first response information to the VROA based on the third request of the VROA. Based on the first use status information generated in step 704, correspondingly, in some embodiments, the first response information may include the hardware resource information (for example, a PM resources list) and the reservation ID. In some embodiments, the first response information may include the hardware resource information (for example, a PM resources list) and the ACK information. The PM resources list may include a hardware ID (for example, an ID of a board/host), remaining resources that are of computing resources, storage resources and network resources, an acceleration capability, and the like. The hardware represents the minimum physical resource set used to bear the VM. Particularly, the computing resources in the remaining resources may include NUMA IDs, and a quantity of remaining cores and a remaining memory on each NUMA. The acceleration capability includes a NUMA capability whose value may be N/A, FPGA, GPU, TPU, or the like. In addition, when there are a plurality of VIMs (in a multi-VIM scenario), the PM resources list may further include VIM IDs, and one or more managed hardware IDs corresponding to each VIM ID.

It should be noted that in a possible application scenario, in step 704, after modifying the status of the VIM from the free state to the reserve state, the VIM may alternatively not generate the first use status information. In this case, the first response fed back by the VIM to the VROA correspondingly does not include the first use status information, and includes only the hardware resource information.

Step 706: Optionally, the VROA determines an algorithm according to the policy specified by the NFVO. For a specific implementation thereof, refer to detailed descriptions of step 110 in the embodiment in FIG. 4. Details are not described herein again.

Step 707: The VROA generates solution information for instantiating the VNF. For a specific implementation thereof, refer to detailed descriptions of step 111 in the embodiment in FIG. 4. Details are not described herein again.

Step 708: The VROA sends a fourth request used for requesting to occupy resources to the VIM.

Specifically, the VROA collects, based on the generated solution information, statistics on IDs of hardware that needs to be used for instantiating the VNF. Then, the VROA sends the fourth request used for requesting to occupy these hardware resources to the VIM, where the fourth request carries the reservation ID and the IDs of these pieces of hardware (or referred to as hardware IDs).

Step 709: The VIM updates, to a reserve state, a use status of each piece of hardware on which a VM needs to be deployed, and updates the use status of the VIM to the free state.

Specifically, after receiving the fourth request of the VROA, the VIM verifies an identity of the VROA by checking the reservation ID. The VIM updates a status of each piece of corresponding hardware from the free state to the reserve state based on the hardware IDs, and in this case, the hardware corresponding to these hardware IDs does not respond to a VM deployment requirement of other VROAs. The VIM updates the status of the VIM from the reserve state to the free state, and in this case, the VIM can respond to a resource query request or a resource occupation request of the other VROAs. Moreover, the VIM may further locally store information about all hardware IDs corresponding to the reservation ID.

Furthermore, in a possible embodiment, the VIM may further generate second use status information. The second use status information indicates that the use status of the VIM has changed from the reserve state to the free state and that the use status of each piece of hardware on which the VNF needs to be deployed has changed from the free state to the reserve state. In a specific implementation, the second use status information may be a group of randomly generated numerals. In another specific implementation, the second use status information may alternatively be ACK information.

Step 710: Optionally, the VIM feeds back a second response to the VROA, where the second response includes the second use status information.

Step 711: The VROA sends a second request to the VIM based on the solution information, where the second request is used to request for instantiating the virtual machine required by the virtualized network function. For a specific implementation thereof, refer to detailed descriptions of step 112 in the embodiment in FIG. 4. Details are not described herein again.

Step 712: The VIM deploys, on hardware based on the request of the VROA, a VM corresponding to the hardware. For a specific implementation thereof, refer to detailed descriptions of step 113 in the embodiment in FIG. 4. Details are not described herein again.

Step 713: After all the VMs corresponding to the VNF are successfully instantiated, the VROA feeds back an ACK message to the NFVO.

Step 714: The VROA notifies the VIM of releasing hardware occupation.

Specifically, the VROA sends a hardware reservation release message to the VIM. In a possible embodiment, the message may carry the reservation ID or the hardware IDs.

Step 715: After receiving the hardware occupation release notification, the VIM updates the status of the hardware corresponding to the hardware IDs from the reserve state to the free state. In this way, subsequently, the hardware corresponding to the hardware IDs can respond to a VM deployment requirement of other VROAs.

It can be learnt that in this embodiment of the present invention, when the VROA needs to query for the hardware resource information, the VROA and the VIM may confirm identities of each other by using the reservation identifier (Reservation ID), and the VIM updates the status of the VIM and then stores an updated status. In addition, in the process in which the VIM instantiates the VNF, the VIM locks in only the hardware resources that need to be used by the VNF, and other hardware resources can still be requested by other VROAs. This greatly improves resource utilization efficiency. After VNF deployment is completed, the VROA interacts with the VIM to release the occupied state of these pieces of hardware. Therefore, in this embodiment of the present invention, specified hardware can serve only one VROA at the same time. This avoids resource preemption in a scenario in which there are a plurality of VROAs, thereby ensuring smooth VNF deployment.

The foregoing details the system architectures related to the embodiments of the present invention and the method embodiments. The following provides related apparatuses in the embodiments of the present invention.

FIG. 15 is a schematic structural diagram of a device 1000 for instantiating a VNF according to an embodiment of the present invention. The device 1000 includes a processor 1030, a memory 1010, and a communications interface 1020. The processor 1030, the memory 1010, and the communications interface 1020 are connected to each other through a bus 1040.

The memory 1010 includes but is not limited to a random-access memory (English: Random Access Memory, RAM for short), a read-only memory (English: Read-Only Memory, ROM for short), an erasable programmable read-only memory (English: Erasable Programmable Read Only Memory, EPROM for short), or a compact disc read-only memory (English: Compact Disc Read-Only Memory, CD-ROM for short). The memory 1010 is configured to store related program instructions and data (for example, a variety of resource data, indication information, and resource orchestration and deployment solution information).

The communications interface 1020 is configured to receive data (for example, various requests, resource data, and indication information), or send data (for example, various requests, resource data, and indication information) externally.

The processor 1030 may be one or more central processing units (English: Central Processing Unit, CPU for short). When the processor 1030 is one CPU, the CPU may be a single-core CPU, or may be a multi-core CPU.

The processor 1030 in the device 1000 is configured to read program code stored in the memory 1010, to perform the following operations:
receiving, by using the communications interface 1020, first information used to indicate to instantiate a VNF;
obtaining, by using the communications interface 1020, hardware resource information used to indicate an available resource of a network functions virtualization infrastructure, where the available resource includes a resource of at least one piece of hardware, and the hardware represents a minimum physical resource set used to bear a virtual machine;
determining, based on the first information and the hardware resource information, a one-to-one mapping relationship between at least one virtual machine corresponding to the VNF and at least one piece of hardware corresponding to the VNF; and
determining, based on the mapping relationship, to instantiate the at least one virtual machine on the at least one piece of hardware.

It should be noted that FIG. 15 is merely an implementation of this embodiment of the present invention. In actual application, the network element device 1000 may alternatively include more or fewer components. This is not limited herein.

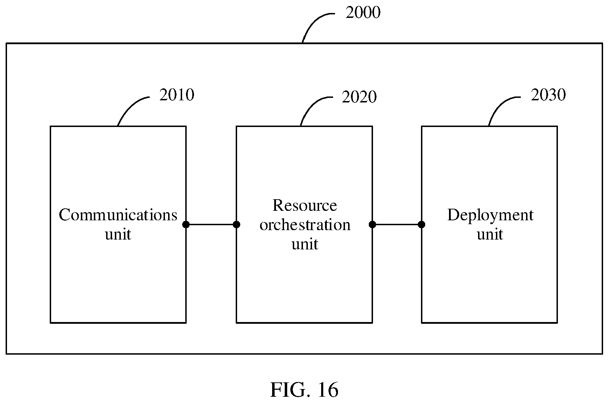

It should also be noted that, for specific implementations of related function units of the processor 1030, the communications interface 1020, and the memory 1010, refer to related descriptions of the VROA in the embodiments in FIG. 4 to FIG. 13, or related descriptions of the first network element in the embodiment in FIG. 14. For brevity of this specification, details are not described herein again. Referring to FIG. 16, based on a same inventive concept, an embodiment of the present invention provides another network element device 2000. The network element device 2000 includes a communications unit 2010, a resource orchestration unit 2020, and a deployment unit 2030, where
the communications unit 2010 is configured to receive first information used to indicateto instantiate a VNF, where
the communications unit 2010 is further configured to obtain hardware resource information used to indicate an available resource of a network functions virtualization infrastructure, where the available resource includes a resource of at least one piece of hardware, and the hardware represents a minimum physical resource set used to bear a virtual machine;
the resource orchestration unit 2020 is configured to determine, based on the first information and the hardware resource information, a one-to-one mapping relationship between at least one virtual machine corresponding to the VNF and at least one piece of hardware corresponding to the VNF; and
the deployment unit 2030 is configured to determine, based on the mapping relationship, to instantiate the at least one virtual machine on the at least one piece of hardware.

In some possible embodiments, the resource orchestration unit 2020 is specifically configured to indicate, based on the mapping relationship, a virtualized infrastructure manager to instantiate the at least one virtual machine on the at least one piece of hardware.

In some possible embodiments, the resource orchestration unit 2020 is further configured to determine an instantiation sequence of the at least one virtual machine based on the first information and the hardware resource information; and the deployment unit 2030 is specifically configured to indicate, based on the mapping relationship and the instantiation sequence, the virtualized infrastructure manager to instantiate the at least one virtual machine on the at least one piece of hardware.

In some possible embodiments, the deployment unit 2030 is specifically configured to sequentially indicate, based on the instantiation sequence of the at least one virtual machine, the virtualized infrastructure manager to instantiate, on current corresponding hardware, a virtual machine mapped to the current corresponding hardware.

In some possible embodiments, the deployment unit 2030 is specifically configured to send the mapping relationship and the instantiation sequence to the virtualized infrastructure manager, so that the virtualized infrastructure manager instantiates the at least one virtual machine on the at least one piece of hardware based on the mapping relationship and the instantiation sequence.

In some possible embodiments, the communications unit 2010 is specifically configured to receive the first information from a network functions virtualization orchestrator.

In some possible embodiments, the communications unit 2010 is further configured to obtain instantiation policy information, where the instantiation policy information indicates a policy used for instantiating the at least one virtual machine; and the resource orchestration unit 2020 is specifically configured to determine, based on the first information, the hardware resource information, and the instantiation policy information, the one-to-one mapping relationship between the at least one virtual machine corresponding to the VNF and the at least one piece of hardware corresponding to the VNF.

In some possible embodiments, the policy includes at least one of a memory-first policy, a resource utilization-first policy, or a host balance degree-first policy.

In some possible embodiments, the first information includes at least one of: at least one virtual machine type, an indication signal of a required resource corresponding to the at least one virtual machine type, instantiation priorities corresponding to the virtual machine types, virtual machine quantities corresponding to the virtual machine types required for instantiating the VNF, or constraint information corresponding to the at least one virtual machine type.

In some possible embodiments, the resource orchestration unit 2020 is specifically configured to: determine the one-to-one mapping relationship between the at least one virtual machine corresponding to the VNF and the at least one piece of hardware corresponding to the VNF, based on the resource of the at least one piece of hardware, the indication signal of the required resource corresponding to the at least one virtual machine type, and the constraint information corresponding to the plurality of virtual machine types; and determine the instantiation sequence of the at least one virtual machine based on the instantiation priority corresponding to the at least one virtual machine type and the virtual machine quantities corresponding to the virtual machine types required for instantiating the VNF.

In some possible embodiments, the constraint information corresponding to the plurality of virtual machine types includes at least one of: affinity/anti-affinity of a same virtual machine type, affinity/anti-affinity of different virtual machine types, and a physical location constraint on virtual machine instantiation.

In some possible embodiments, the communications unit 2010 is specifically configured to query for the hardware resource information from the virtualized infrastructure manager.

In some possible embodiments, the communications unit 2010 is specifically configured to: send a request used for querying for the hardware resource information to the virtualized infrastructure manager; and receive the hardware resource information returned by the virtualized infrastructure manager and first use status information of the virtualized infrastructure manager, where the first use status information indicates that a use status of the virtualized infrastructure manager has changed from an idle state to an occupied state.

In some possible embodiments, the communications unit 2010 is further configured to: after the resource orchestration unit 2020 determines the one-to-one mapping relationship between the at least one virtual machine corresponding to the VNF and the at least one piece of hardware corresponding to the VNF, send a request used for requesting to occupy hardware resources to the virtualized infrastructure manager, where the request used for requesting to occupy the hardware resources includes an identifier of the at least one piece of hardware mapped to the at least one virtual machine.

In some possible embodiments, the communications unit 2010 is further configured to obtain capability information of the virtualized infrastructure manager, where the capability information of the virtualized infrastructure manager is used to indicate whether the virtualized infrastructure manager is capable of instantiating a virtual machine on hardware specified by the network element device 2000; and the communications unit 2010 is specifically configured to: when the capability information of the virtualized infrastructure manager indicates that the virtualized infrastructure manager is capable of instantiating a virtual machine on hardware specified by the network element device 2000, obtain the hardware resource information used to indicate the available resource of the network functions virtualization infrastructure.

It should be noted that related function units of the network element device 2000 may be implemented by hardware, software, or a combination of hardware and software. A person skilled in the art should understand that, function units described in FIG. 16 may be combined or divided into several subunits to implement the solutions of the present invention. For function implementations of these function units, refer to related descriptions of the VROA in the embodiments in FIG. 4 to FIG. 13, or related descriptions of the first network element in the embodiment in FIG. 14. For brevity of this specification, details are not described herein again.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or function according to the embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

In the foregoing embodiments, the description of each embodiment has respective focuses. For a part that is not described in detail in an embodiment, refer to related descriptions in other embodiments.

## Claims

1. A method for instantiating a virtualized network function VNF, wherein the method comprises:
receiving, by a first network element, first information used to indicate to instantiate a VNF;
obtaining, by the first network element, hardware resource information used to indicate an available resource of a network functions virtualization infrastructure, wherein the available resource comprises a resource of at least one piece of hardware, and the hardware represents a minimum physical resource set used to bear a virtual machine;
determining, by the first network element based on the first information and the hardware resource information, a one-to-one mapping relationship between at least one virtual machine corresponding to the VNF and at least one piece of hardware corresponding to the VNF; and
determining, by the first network element based on the mapping relationship, to instantiate the at least one virtual machine on the at least one piece of hardware.

2. The method according to claim 1, wherein the determining, by the first network element based on the mapping relationship, to instantiate the at least one virtual machine on the at least one piece of hardware comprises:
indicating, by the first network element based on the mapping relationship, a virtualized infrastructure manager to instantiate the at least one virtual machine on the at least one piece of hardware.

3. The method according to claim 2, wherein the method further comprises: determining, by the first network element, an instantiation sequence of the at least one virtual machine based on the first information and the hardware resource information; and
the indicating, by the first network element based on the mapping relationship, a virtualized infrastructure manager to instantiate the at least one virtual machine on the at least one piece of hardware comprises: indicating, by the first network element based on the mapping relationship and the instantiation sequence, the virtualized infrastructure manager to instantiate the at least one virtual machine on the at least one piece of hardware.

4. The method according to claim 3, wherein the indicating, by the first network element based on the mapping relationship and the instantiation sequence, the virtualized infrastructure manager to instantiate the at least one virtual machine on the at least one piece of hardware comprises:
sequentially indicating, by the first network element based on the instantiation sequence of the at least one virtual machine, the virtualized infrastructure manager to instantiate, on current corresponding hardware, a virtual machine mapped to the current corresponding hardware.

5. The method according to claim 3, wherein the indicating, by the first network element based on the mapping relationship and the instantiation sequence, the virtualized infrastructure manager to instantiate the at least one virtual machine on the at least one piece of hardware comprises:
sending, by the first network element, the mapping relationship and the instantiation sequence to the virtualized infrastructure manager, so that the virtualized infrastructure manager instantiates the at least one virtual machine on the at least one piece of hardware based on the mapping relationship and the instantiation sequence.

6. The method according to any one of claims 1 to 5, wherein the receiving, by a first network element, first information used to indicate to instantiate a VNF comprises:
receiving, by the first network element, the first information from a network functions virtualization orchestrator.

7. The method according to any one of claims 1 to 6, wherein the method further comprises:
obtaining, by the first network element, instantiation policy information, wherein the instantiation policy information indicates a policy used for instantiating the at least one virtual machine; and
correspondingly, the determining, by the first network element based on the first information and the hardware resource information, a one-to-one mapping relationship between at least one virtual machine corresponding to the VNF and at least one piece of hardware corresponding to the VNF comprises:
determining, by the first network element based on the first information, the hardware resource information, and the instantiation policy information, the one-to-one mapping relationship between the at least one virtual machine corresponding to the VNF and the at least one piece of hardware corresponding to the VNF.

8. The method according to claim 7, wherein the policy comprises:
at least one of a memory-first policy, a resource utilization-first policy, or a host balance degree-first policy.

9. The method according to claim 3, wherein the first information comprises at least one of: at least one virtual machine type, an indication signal of a required resource corresponding to the at least one virtual machine type, instantiation priorities corresponding to the virtual machine types, virtual machine quantities corresponding to the virtual machine types required for instantiating the VNF, or constraint information corresponding to the at least one virtual machine type.

10. The method according to claim 9, wherein
the determining, by the first network element based on the first information and the hardware resource information, a one-to-one mapping relationship between at least one virtual machine corresponding to the VNF and at least one piece of hardware corresponding to the VNF comprises: determining, by the first network element, the one-to-one mapping relationship between the at least one virtual machine corresponding to the VNF and the at least one piece of hardware corresponding to the VNF, based on the resource of the at least one piece of hardware, the indication signal of the required resource corresponding to the at least one virtual machine type, and the constraint information corresponding to the plurality of virtual machine types; and
the determining, by the first network element, an instantiation sequence of the at least one virtual machine based on the first information and the hardware resource information comprises: determining, by the first network element, the instantiation sequence of the at least one virtual machine based on the instantiation priority corresponding to the at least one virtual machine type and the virtual machine quantities corresponding to the virtual machine types required for instantiating the VNF.

11. The method according to claim 9 or 10, wherein
the constraint information corresponding to the plurality of virtual machine types comprises at least one of:
affinity/anti-affinity of a same virtual machine type, affinity/anti-affinity of different virtual machine types, and a physical location constraint on virtual machine instantiation.

12. The method according to any one of claims 1 to 11, wherein the obtaining, by the first network element, hardware resource information used to indicate an available resource of a network functions virtualization infrastructure comprises:
querying, by the first network element, for the hardware resource information from the virtualized infrastructure manager.

13. The method according to claim 12, wherein the querying, by the first network element, for the hardware resource information from the virtualized infrastructure manager comprises:
sending, by the first network element, a request used for querying for the hardware resource information to the virtualized infrastructure manager; and
receiving, by the first network element, the hardware resource information returned by the virtualized infrastructure manager and first use status information of the virtualized infrastructure manager, wherein the first use status information indicates that a use status of the virtualized infrastructure manager has changed from an idle state to an occupied state.

14. The method according to claim 13, wherein after the determining a one-to-one mapping relationship between at least one virtual machine corresponding to the VNF and at least one piece of hardware corresponding to the VNF, the method further comprises:
sending, by the first network element, a request used for requesting to occupy hardware resources to the virtualized infrastructure manager, wherein the request used for requesting to occupy the hardware resources comprises an identifier of the at least one piece of hardware mapped to the at least one virtual machine.

15. The method according to any one of claims 1 to 14, wherein the method further comprises:
obtaining, by the first network element, capability information of the virtualized infrastructure manager, wherein the capability information of the virtualized infrastructure manager is used to indicate whether the virtualized infrastructure manager is capable of instantiating a virtual machine on hardware specified by the first network element; and
correspondingly, the obtaining, by the first network element, hardware resource information used to indicate an available resource of a network functions virtualization infrastructure is specifically:
when the capability information of the virtualized infrastructure manager indicates that the virtualized infrastructure manager is capable of instantiating a virtual machine on hardware specified by the first network element, obtaining, by the first network element, the hardware resource information used to indicate the available resource of the network functions virtualization infrastructure.

16. A network element device for instantiating a virtualized network function VNF, wherein the device comprises:
a communications unit, configured to receive first information used to indicate to instantiate a VNF, wherein
the communications unit is further configured to obtain hardware resource information used to indicate an available resource of a network functions virtualization infrastructure, wherein the available resource comprises a resource of at least one piece of hardware, and the hardware represents a minimum physical resource set used to bear a virtual machine;
a resource orchestration unit, configured to determine, based on the first information and the hardware resource information, a one-to-one mapping relationship between at least one virtual machine corresponding to the VNF and at least one piece of hardware corresponding to the VNF; and
a deployment unit, configured to determine, based on the mapping relationship, to instantiate the at least one virtual machine on the at least one piece of hardware.

17. The device according to claim 16, wherein the resource orchestration unit is specifically configured to:
indicate, based on the mapping relationship, a virtualized infrastructure manager to instantiate the at least one virtual machine on the at least one piece of hardware.

18. The device according to claim 17, wherein the resource orchestration unit is further configured to determine an instantiation sequence of the at least one virtual machine based on the first information and the hardware resource information; and
the deployment unit is specifically configured to indicate, based on the mapping relationship and the instantiation sequence, the virtualized infrastructure manager to instantiate the at least one virtual machine on the at least one piece of hardware.

19. The device according to claim 18, wherein the deployment unit is specifically configured to:
sequentially indicate, based on the instantiation sequence of the at least one virtual machine, the virtualized infrastructure manager to instantiate, on current corresponding hardware, a virtual machine mapped to the current corresponding hardware.

20. The device according to claim 18, wherein the deployment unit is specifically configured to:
send the mapping relationship and the instantiation sequence to the virtualized infrastructure manager, so that the virtualized infrastructure manager instantiates the at least one virtual machine on the at least one piece of hardware based on the mapping relationship and the instantiation sequence.

21. The device according to any one of claims 16 to 20, wherein
the communications unit is specifically configured to receive the first information from a network functions virtualization orchestrator.

22. The device according to any one of claims 16 to 21, wherein
the communications unit is further configured to obtain instantiation policy information, wherein the instantiation policy information indicates a policy used for instantiating the at least one virtual machine; and
the resource orchestration unit is specifically configured to determine, based on the first information, the hardware resource information, and the instantiation policy information, the one-to-one mapping relationship between the at least one virtual machine corresponding to the VNF and the at least one piece of hardware corresponding to the VNF.

23. The device according to claim 22, wherein the policy comprises:
at least one of a memory-first policy, a resource utilization-first policy, or a host balance degree-first policy.

24. The device according to claim 18, wherein the first information comprises at least one of: at least one virtual machine type, an indication signal of a required resource corresponding to the at least one virtual machine type, instantiation priorities corresponding to the virtual machine types, virtual machine quantities corresponding to the virtual machine types required for instantiating the VNF, or constraint information corresponding to the at least one virtual machine type.

25. The device according to claim 24, wherein the resource orchestration unit is specifically configured to:
determine the one-to-one mapping relationship between the at least one virtual machine corresponding to the VNF and the at least one piece of hardware corresponding to the VNF, based on the resource of the at least one piece of hardware, the indication signal of the required resource corresponding to the at least one virtual machine type, and the constraint information corresponding to the plurality of virtual machine types; and
determine the instantiation sequence of the at least one virtual machine based on the instantiation priority corresponding to the at least one virtual machine type and the virtual machine quantities corresponding to the virtual machine types required for instantiating the VNF.

26. The device according to claim 24 or 25, wherein
the constraint information corresponding to the plurality of virtual machine types comprises at least one of:
affinity/anti-affinity of a same virtual machine type, affinity/anti-affinity of different virtual machine types, and a physical location constraint on virtual machine instantiation.

27. The device according to any one of claims 16 to 26, wherein the communications unit is specifically configured to:
query for the hardware resource information from the virtualized infrastructure manager.

28. The device according to claim 27, wherein the communications unit is specifically configured to:
send a request used for querying for the hardware resource information to the virtualized infrastructure manager; and
receive the hardware resource information returned by the virtualized infrastructure manager and first use status information of the virtualized infrastructure manager, wherein the first use status information indicates that a use status of the virtualized infrastructure manager has changed from an idle state to an occupied state.

29. The device according to claim 28, wherein the communications unit is further configured to:
after the resource orchestration unit determines the one-to-one mapping relationship between the at least one virtual machine corresponding to the VNF and the at least one piece of hardware corresponding to the VNF, send a request used for requesting to occupy hardware resources to the virtualized infrastructure manager, wherein the request used for requesting to occupy the hardware resources comprises an identifier of the at least one piece of hardware mapped to the at least one virtual machine.

30. The device according to any one of claims 16 to 29, wherein
the communications unit is further configured to obtain capability information of the virtualized infrastructure manager, wherein the capability information of the virtualized infrastructure manager is used to indicate whether the virtualized infrastructure manager is capable of instantiating a virtual machine on hardware specified by the network element device; and
the communications unit is specifically configured to: when the capability information of the virtualized infrastructure manager indicates that the virtualized infrastructure manager is capable of instantiating a virtual machine on hardware specified by the network element device, obtain the hardware resource information used to indicate the available resource of the network functions virtualization infrastructure.

31. A network element device for instantiating a virtualized network function VNF, wherein the network element device comprises a memory and one or more processors coupled to the memory, the memory is configured to store program instructions, and the one or more processors are configured to invoke the program instructions to specifically perform the method according to any one of claims 1 to 15.

32. A system, wherein the system comprises:
a network functions virtualization orchestrator, configured to send first information used to indicate to instantiate a VNF to a virtual resource orchestrator and allocator;
the virtual resource orchestrator and allocator, configured to: obtain hardware resource information used to indicate an available resource of a network functions virtualization infrastructure, wherein the available resource comprises a resource of at least one piece of hardware, and the hardware represents a minimum physical resource set used to bear a virtual machine; determine, based on the first information and the hardware resource information, a one-to-one mapping relationship between at least one virtual machine corresponding to the VNF and at least one piece of hardware corresponding to the VNF; and send, to a virtualized infrastructure manager based on the mapping relationship, a request used for requesting to instantiate the virtual machine required by the VNF; and
the virtualized infrastructure manager, configured to instantiate the at least one virtual machine on the at least one piece of hardware based on the request; wherein
the virtual resource orchestrator and allocator is the network element device according to any one of claims 16 to 30, or the virtual resource orchestrator and allocator is the network element device according to claim 31.
